# EUROPEAN PATENT SPECIFICATION

(11) **EP 4 496 211 B1**
(45) Date of publication and mention of the grant of the patent: **09.12.2026**
(21) Application number: 23779932.5
(22) Date of filing: 22.03.2023
(51) Int. Cl.: H02P 25/02, F04D 27/00, H02K 7/09, H02K 7/14

(54) **DRIVE SYSTEM, TURBO COMPRESSOR, REFRIGERATION DEVICE**
ANTRIEBSSYSTEM, TURBOVERDICHTER, KÜHLVORRICHTUNG
SYSTÈME D'ENTRAÎNEMENT, TURBOCOMPRESSEUR, DISPOSITIF DE RÉFRIGÉRATION

(30) Priority: 31.03.2022 JP 2022058244
(43) Date of publication of application: 22.01.2025
(73) Proprietor: DAIKIN INDUSTRIES, LTD., Osaka-shi, Osaka 530-0001 (JP)
(72) Inventor: KURODA Shota, Osaka-shi, Osaka 530-0001 (JP); SAKAWAKI Atsushi, Osaka-shi, Osaka 530-0001 (JP); IRINO Yusuke, Osaka-shi, Osaka 530-0001 (JP)
(74) Representative: Hoffmann Eitle
(86) International application number: PCT/JP2023/011162
(87) International publication number: WO 2023/189920

(56) References cited:
- JP-A- 2009 293 907
- JP-A- 2019 049 266
- JP-A- 2020 048 327
- JP-A- 2020 162 345
- JP-A- 2020 162 345
- JP-A- 2020 162 379
- US-B1- 6 351 048

## Description

### Technical Field

The present disclosure relates to a drive system, a turbo compressor, and a refrigeration device.

### Background Art

International Publication No. 2015/019463 discloses an electric motor system including an electric motor, a controller, and an electric-current sensor. The electric motor constitutes a bearingless motor that floats and contactlessly supports a rotor including a shaft.

Further examples of the prior art are disclosed in documents JP 2020 162345 A and US 6 351 048 B1,

### Summary of Invention

### Technical Problem

International Publication No. 2015/019463 neither discloses nor suggests detecting the rotational angle of a shaft before the shaft is supported contactlessly. Solution to Problem

A first aspect of the present disclosure relates to a drive system, the drive system including: a shaft (20) including a measurement target portion (25); a support portion (11) configured to support the shaft (20) contactlessly by an electromagnetic force; a drive portion (12) configured to rotationally drive the shaft (20) by an electromagnetic force; a touchdown bearing (50) configured to, when the shaft (20) is not supported by the support portion (11) contactlessly, come into contact with the shaft (20) and support the shaft (20) such that the shaft (20) is rotatable; a controller (80) configured to perform a starting process before the shaft (20) is supported contactlessly by the support portion (11), in which, in the starting process, the controller (80) detects a rotational angle of the shaft (20) in a state in which the shaft (20) is in contact with the touchdown bearing (50).

A second aspect of the present disclosure is the drive system in the first aspect, the drive system including a rotational-angle sensor (60) configured to output a signal corresponding to a rotational angle of the measurement target portion (25), in which, in the starting process, the controller (80) controls the drive portion (12) to rotate the shaft (20) in a state in which the shaft (20) is in contact with the touchdown bearing (50), and the controller (80) detects the rotational angle of the shaft (20) based on the signal output from the rotational-angle sensor (60).

By performing the starting process, it is possible in the first and second aspects to detect the rotational angle of the shaft (20) before the shaft (20) is supported contactlessly.

A third aspect of the present disclosure is the drive system in the second aspect, in which the rotational-angle sensor (60) is a gap sensor configured to output a signal corresponding to a distance to the measurement target portion (25) and in which the measurement target portion (25) is configured such that a distance to the rotational-angle sensor (60) changes in accordance with a change in the rotational angle of the shaft (20).

In the third aspect, when the rotational angle of the shaft (20) changes, the distance between the measurement target portion (25) of the shaft (20) and the rotational-angle sensor (60) changes, and, as a result, a signal output from the rotational-angle sensor (60) changes. It is thus possible to detect the rotational angle of the shaft (20) on the basis of a signal output from the rotational-angle sensor (60).

A fourth aspect of the present disclosure is the drive system in the third aspect, in which, in the starting process, the controller (80) controls the support portion (11) such that the shaft (20) is moved by the electromagnetic force and the measurement target portion (25) approaches the rotational-angle sensor (60).

In the fourth aspect, it is possible in the starting process to make the distance between the rotational-angle sensor (60) and the measurement target portion (25) of the shaft (20) shorter than the distance between the rotational-angle sensor (60) and the measurement target portion (25) of the shaft (20) at the start of the starting process. Consequently, it is possible in the starting process to increase a signal change corresponding to a distance change of the rotational-angle sensor (60) and possible to improve accuracy of the process of detecting the rotational angle of the shaft (20) on the basis of an output signal of the rotational-angle sensor (60).

A fifth aspect of the present disclosure is the drive system in the fourth aspect, in which, in the starting process, the controller (80) controls, while controlling the support portion (11) such that a state in which the measurement target portion (25) is close to the rotational-angle sensor (60) is maintained, the drive portion (12) to rotate the shaft (20).

In the fifth aspect, it is possible in the starting process to maintain a state in which the distance between the rotational-angle sensor (60) and the measurement target portion (25) of the shaft (20) is shorter than the "distance between the rotational-angle sensor (60) and the measurement target portion (25) of the shaft (20) at the start of the starting process". Consequently, it is possible in the starting process to maintain a state in which the signal change corresponding to the distance change of the rotational-angle sensor (60) is large and it is thus possible to continuously improve accuracy of the process of detecting the rotational angle of the shaft (20) on the basis of an output signal of the rotational-angle sensor (60).

A sixth aspect of the present disclosure is the drive system in the third aspect, in which the rotational-angle sensor (60) is disposed such that a distance (G1) between the rotational-angle sensor (60) and the measurement target portion (25) when the shaft (20) is not supported contactlessly by the support portion (11) is less than or equal to a distance (G0) between the rotational-angle sensor (60) and the measurement target portion (25) when a position of the shaft (20) supported contactlessly by the support portion (11) is at a reference position.

In the sixth aspect, it is possible in the starting process, in which the shaft (20) is in a touchdown state (state of being in contact with the touchdown bearing (50)), to make the distance between the rotational-angle sensor (60) and the measurement target portion (25) of the shaft (20) smaller than or equal to the distance (G0) between the rotational-angle sensor (60) and the measurement target portion (25) of the shaft (20) when the position of the shaft (20) supported by the support portion (11) contactlessly is at the reference position. Consequently, it is possible in the starting process to avoid a situation in which the signal change corresponding to the distance change of the rotational-angle sensor (60) becomes too small and it is thus possible to suppress a decrease in accuracy of the process of detecting the rotational angle of the shaft (20) on the basis of an output signal of the rotational-angle sensor (60).

A seventh aspect of the present disclosure is the drive system in any one of the third to sixth aspects, the drive system including a position sensor (70) that is a gap sensor configured to output a signal corresponding to a distance to the shaft (20), in which a dynamic range of the rotational-angle sensor (60) is identical to a dynamic range of the position sensor (70).

In the seventh aspect, it is possible to unify the type of the gap sensor serving as the rotational-angle sensor (60) and the type of the gap sensor serving as the position sensor (70). Consequently, it is possible to reduce procurement costs of sensors.

An eighth aspect of the present disclosure is the drive system in any one of the third to seventh aspects, in which the measurement target portion (25) is provided with a plurality of first step portions (201) arranged at predetermined intervals in a circumferential direction of the shaft (20), and one of the plurality of first step portions (201) also serves as a second step portion (202) for detecting the rotation reference of the shaft (20).

It is possible in the eighth aspect to reduce the number of the rotational-angle sensors (60) compared with a case where the first step portions (201) and the second step portion (202) are separately provided at the measurement target portion (25) of the shaft (20). Consequently, it is possible to reduce costs required for sensors.

A ninth aspect of the present disclosure is the drive system in any one of the first to eighth aspects, the drive system including a bearingless motor (30) including a support winding (35) and a drive winding (36), in which the support winding (35) is a winding configured to generate, by being energized, an electromagnetic force for supporting the shaft (20) contactlessly, the support winding (35) functioning as the support portion (11), and the drive winding (36) is a winding configured to be caused by being energized to generate an electromagnetic force for rotationally driving the shaft (20), the drive winding (36) functioning as the drive portion (12).

A tenth aspect of the present disclosure relates to a turbo compressor including the drive system in any one of the first to ninth aspects.

An eleventh aspect of the present disclosure relates to a refrigeration device including the turbo compressor in the tenth aspect.

### Brief Description of Drawings

[Fig. 1] Fig. 1 is a cross-sectional view illustrating an example of a configuration of a turbo compressor in an embodiment.
[Fig. 2] Fig. 2 is a cross-sectional view illustrating an example of a configuration of a first shaft portion of a measurement target portion of a shaft.
[Fig. 3] Fig. 3 is a cross-sectional view illustrating an example of a configuration of a second shaft portion of a measurement target portion of a shaft.
[Fig. 4] Fig. 4 is a cross-sectional view illustrating an example of a configuration of a bearingless motor.
[Fig. 5] Fig. 5 is a cross-sectional view illustrating an example of a configuration of a radial magnetic bearing.
[Fig. 6] Fig. 6 is a cross-sectional view illustrating an example of a touchdown state of a shaft in an embodiment.
[Fig. 7] Fig. 7 is a graph showing, as examples, output signals of a rotational-angle sensor and changes in the rotational angle of a shaft in an embodiment.
[Fig. 8] Fig. 8 is a flowchart illustrating an example of a starting process in an embodiment.
[Fig. 9] Fig. 9 is a cross-sectional view illustrating an example of the arrangement of a rotational-angle sensor.
[Fig. 10] Fig. 10 is a graph showing, as examples, output characteristics of a gap sensor.
[Fig. 11] Fig. 11 is a cross-sectional view illustrating an example of a configuration of a turbo compressor in Modification 2 of an embodiment.
[Fig. 12] Fig. 12 is a cross-sectional view illustrating an example of an approached state of a shaft in Modification 2 of an embodiment.
[Fig. 13] Fig. 13 is a flowchart illustrating an example of a starting process in Modification 2 of an embodiment.
[Fig. 14] Fig. 14 is a cross-sectional view illustrating an example of a configuration of a turbo compressor in Modification 3 of an embodiment.
[Fig. 15] Fig. 15 is a cross-sectional view illustrating an example of a touchdown state of a shaft in Modification 3 of an embodiment.
[Fig. 16] Fig. 16 is a cross-sectional view illustrating an example of an approached state of a shaft in Modification 3 of an embodiment.
[Fig. 17] Fig. 17 is a cross-sectional view illustrating an example of a configuration of a first shaft portion of a measurement target portion of a shaft in Modification 4 of an embodiment.
[Fig. 18] Fig. 18 is a graph showing, as examples, output signals of a rotational-angle sensor and changes in the rotational angle of a shaft in Modification 4 of an embodiment.
[Fig. 19] Fig. 19 is a schematic view illustrating an example of a configuration of a refrigeration device.
[Fig. 20] Fig. 20 is a cross-sectional view illustrating an example of a modification of a measurement target portion of a shaft.

### Description of Embodiments

Hereinafter, an embodiment will be described in detail with reference to the drawings. In the drawings, the same or corresponding components are denoted by the same reference signs, and the description thereof is not repeated.

### (Turbo Compressor)

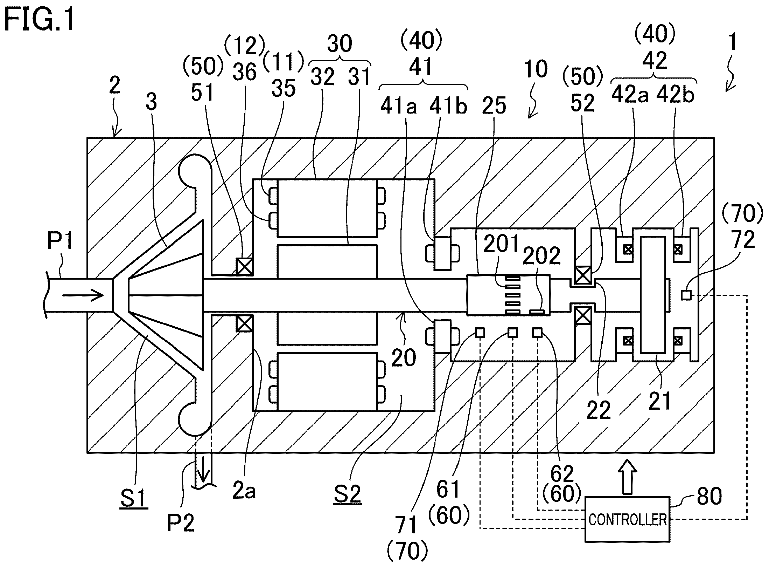

In Fig. 1, a configuration of a turbo compressor (1) in an embodiment is illustrated as an example. The turbo compressor (1) sucks and compresses a fluid and discharges the compressed fluid. In this example, the turbo compressor (1) includes a casing (2), an impeller (3), and a drive system (10). The drive system (10) includes a shaft (20), a bearingless motor (30), a magnetic bearing (40), and a touchdown bearing (50).

In the following description, a direction of an axis of a member is referred to as the "axial direction" of the member. A direction orthogonal to an axis of a member is referred to as the "radial direction" of the member. A direction around an axis of a member is referred to as the "circumferential direction" of the member. For example, the axial direction of the shaft (20) is a direction in which the rotational axis of the shaft (20) extends. The radial direction of the shaft (20) is a direction orthogonal to the rotational axis of the shaft (20). The circumferential direction of the shaft (20) is a direction around the rotational axis of the shaft (20).

### [Casing]

The casing (2) is formed in a shape of a cylinder whose two ends are closed. A space in the casing (2) is partitioned into two spaces by a wall portion (2a). One of the spaces constitutes an impeller chamber (S1) and the other one of the spaces constitutes a motor chamber (S2). The impeller (3) is accommodated in the impeller chamber (S1). The bearingless motor (30), the magnetic bearing (40), and the touchdown bearing (50) are accommodated in the motor chamber (S2) and are fixed to an inner peripheral wall of the motor chamber (S2). In this example, the casing (2) is disposed such that the axis (the axis of the cylinder) of the casing (2) is horizontal.

### [Shaft]

The shaft (20) is accommodated in the casing (2). The shaft (20) extends from the impeller chamber (S1) to the motor chamber (S2) through the wall portion (2a). The impeller (3) is fixed to one end portion of the shaft (20). For example, the shaft (20) is made of a magnetic material, such as iron.

In this example, the shaft (20) includes a disk portion (21), a concave portion (22), and a measurement target portion (25). The disk portion (21) is provided at another end portion of the shaft (20). The concave portion (22) is provided in the vicinity of the other end portion of the shaft (20). The concave portion (22) is formed over the entire circumference of the shaft (20). The measurement target portion (25) is provided between the one end portion of the shaft (20) and the concave portion (22).

The measurement target portion (25) is configured such that a distance to a rotational-angle sensor (60), which is described later, changes in accordance with a change in the rotational angle of the shaft (20). In this example, the measurement target portion (25) is formed in a shaft shape. The measurement target portion (25) is provided with a plurality of first step portions (201) and a second step portion (202).

The plurality of first step portions (201) are arranged at predetermined intervals in the circumferential direction of the shaft (20). The plurality of first step portions (201) are provided to detect a change in the rotational angle of the shaft (20).

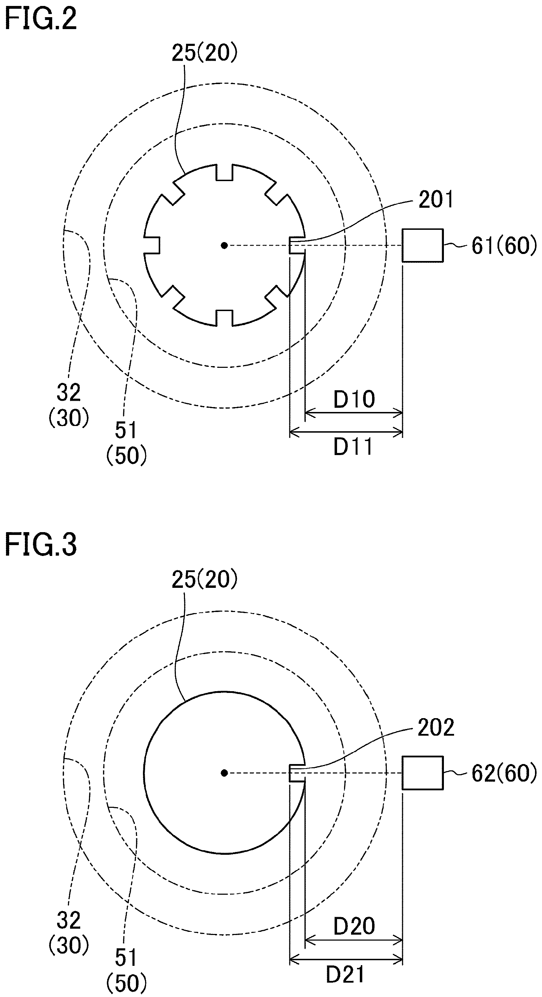

As illustrated in Fig. 2, eight first step portions (201) are provided at equal intervals in the circumferential direction of the shaft (20) in this example. The first step portions (201) are concave portions (grooves). A shaft portion (hereinafter referred to as the "first shaft portion") of the measurement target portion (25) of the shaft (20), the shaft portion being provided with the first step portions (201), is a measurement target of a first rotational-angle sensor (61), which is described later.

The second step portion (202) is provided at a shaft portion adjacent to the first shaft portion (the shaft portion provided with the plurality of first step portions (201)) in the axial direction of the shaft (20). The second step portion (202) is provided to detect a rotation reference of the shaft (20).

As illustrated in Fig. 3, one second step portion (202) is provided in this example. The second step portion (202) is a concave portion (groove). A shaft portion (hereinafter referred to as the "second shaft portion") of the measurement target portion (25) of the shaft (20), the shaft portion being provided with the second step portion (202), is a measurement target of a second rotational-angle sensor (62), which is described later.

### [Impeller]

The impeller (3) includes a plurality of blades and is formed to have a substantially conical outer shape. The impeller (3) is accommodated, in a state of being fixed to one end portion of the shaft (20), in the impeller chamber (S1). A suction pipe (P1) and a discharge pipe (P2) are connected to the impeller chamber (S1). The suction pipe (P1) is provided to guide a fluid from the outside into the impeller chamber (S1). The discharge pipe (P2) is provided to guide a fluid compressed in the impeller chamber (S1) and having a high pressure to the outside. In this example, the impeller (3) and the impeller chamber (S1) constitute a compression mechanism.

### [Bearingless Motor]

The bearingless motor (30) includes a rotor (31) and a stator (32), and the bearingless motor (30) supports the shaft (20) contactlessly by an electromagnetic force and rotationally drives the shaft (20). The rotor (31) is fixed to the shaft (20), and the stator (32) is fixed to an inner peripheral wall of the casing (2). In this example, the bearingless motor (30) is disposed between one end portion (the end portion to which the impeller (3) is fixed) of the shaft (20) and the measurement target portion (25).

Specifically, the bearingless motor (30) includes a support winding (35) and a drive winding (36). The support winding (35) and the drive winding (36) are provided at the stator (32).

The support winding (35) is a winding that generates, by being energized, an electromagnetic force for supporting the shaft (20) contactlessly. The support winding (35) functions as a support portion (11) that supports the shaft (20) contactlessly by an electromagnetic force. The support winding (35) is an example of the support portion (11).

The drive winding (36) is a winding that generates, by being energized, an electromagnetic force for rotationally driving the shaft (20). The drive winding (36) functions as a drive portion (12) that rotationally drives the shaft (20) by an electromagnetic force. The drive winding (36) is an example of the drive portion (12).

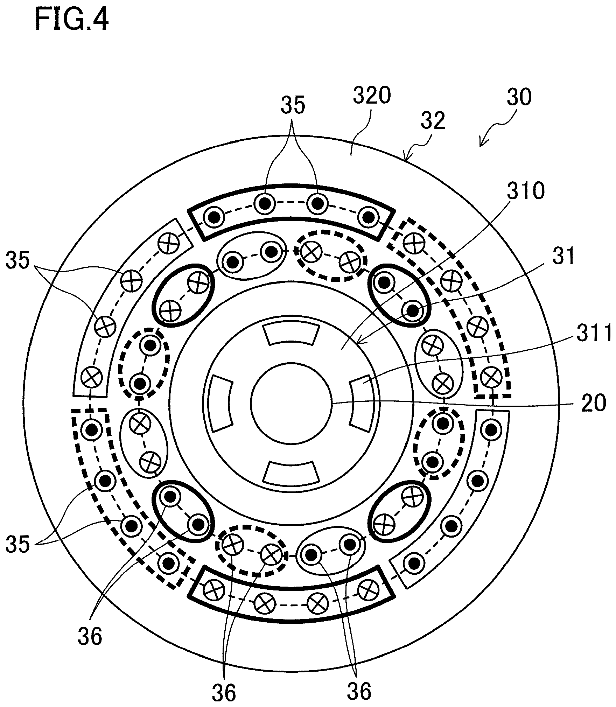

As illustrated in Fig. 4, in this example, the bearingless motor (30) is constituted by a bearingless motor of a consequent pole type.

### <Rotor>

The rotor (31) includes a rotor core (310) and a plurality of permanent magnets (311). The rotor core (310) is made of a magnetic material and formed in a columnar shape. For example, the rotor core (310) is constituted by a laminated core in which disc-shaped electromagnetic steel sheets are laminated. A shaft hole into which the shaft (20) is inserted is provided at a central portion of the rotor core (310). The plurality of permanent magnets (311) are disposed at a predetermined angular pitch in the circumferential direction of the rotor (31).

In this example, the rotor (31) is provided with four permanent magnets (311). The four permanent magnets (311) are disposed at an angular pitch of 90° in the circumferential direction of the rotor (31) and embedded in an outer peripheral portion (in the vicinity of the outer peripheral surface) of the rotor core (310). In addition, the four permanent magnets (311) are formed in an arc shape along the outer peripheral surface of the rotor core (310), and the outer peripheral surface side becomes an N pole.

With such a configuration, a portion of the outer peripheral portion of the rotor core (310), the portion being located among the four permanent magnets (311) in the circumferential direction of the rotor (31), becomes a pseudo S pole. The outer peripheral surface side of the four permanent magnets (311) may be the S pole. In this case, a portion of the outer peripheral portion of the rotor core (310), the portion being located among the four permanent magnets (311) in the circumferential direction of the rotor (31), becomes a pseudo N pole.

### <Stator>

The stator (32) faces the rotor (31) with a predetermined air gap therebetween. The stator (32) includes a stator core (320), the support winding (35), and the drive winding (36). The stator core (320) is made of a magnetic material. For example, the stator core (320) is constituted by a laminated core in which annular electromagnetic steel sheets are laminated. The stator core (320) includes a back yoke formed in a cylindrical shape and a plurality of teeth (not illustrated) provided on an inner peripheral surface of the back yoke.

The support winding (35) is wound around a radially outside portion of the teeth of the stator core (320). In this example, the bearingless motor (30) is provided with three types of the support windings (35). Specifically, the support windings (35) surrounded by a thick solid line in Fig. 4 constitute a U-phase support winding. The support windings (35) surrounded by a thick broken line in Fig. 4 constitute a V-phase support winding. The support windings (35) surrounded by a thin solid line in Fig. 4 constitute a W-phase support winding.

The drive winding (36) is wound around a radially inside portion of the teeth of the stator core (320). In this example, the bearingless motor (30) is provided with three types of the drive windings (36). Specifically, the drive windings (36) surrounded by a thick solid line in Fig. 4 constitute a U-phase drive winding. The drive windings (36) surrounded by a thick broken line in Fig. 4 constitute a V-phase drive winding. The drive windings (36) surrounded by a thin solid line in Fig. 4 constitute a W-phase drive winding.

### [Magnetic Bearing]

The magnetic bearing (40) includes a plurality of electromagnets and supports the shaft (20) contactlessly by the electromagnetic forces of the plurality of electromagnets. The magnetic bearing (40) controls the position of the shaft (20) by an electromagnetic force. The magnetic bearing (40) functions as the support portion (11) that supports the shaft (20) contactlessly by an electromagnetic force. The magnetic bearing (40) is an example of the support portion (11). In this example, a radial magnetic bearing (41) and a thrust magnetic bearing (42) are provided as the magnetic bearing (40).

### <Radial Magnetic Bearing>

The radial magnetic bearing (41) controls a radial position of the shaft (20) contactlessly by an electromagnetic force. In this example, the radial magnetic bearing (41) is disposed between the bearingless motor (30) and the measurement target portion (25) of the shaft (20).

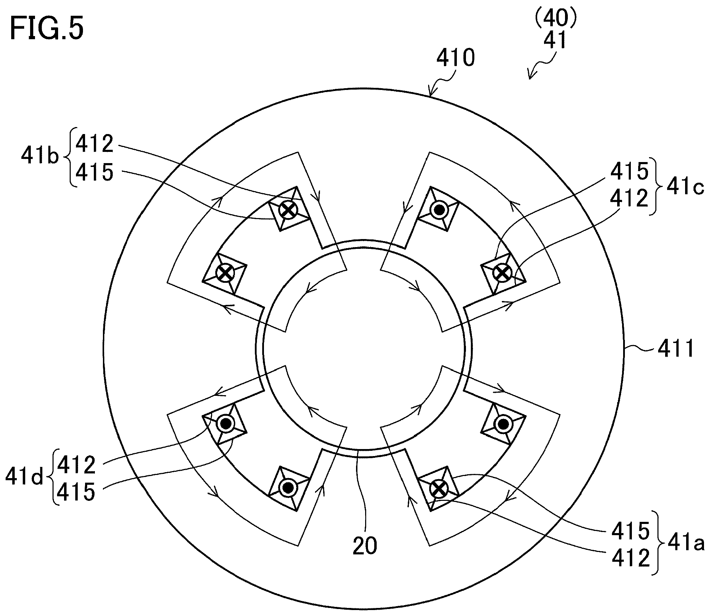

As illustrated in Fig. 5, in this example, the radial magnetic bearing (41) includes a first radial electromagnet (41a), a second radial electromagnet (41b), a third radial electromagnet (41c), and a fourth radial electromagnet (41d). The first radial electromagnet (41a) and the second radial electromagnet (41b) face each other with the shaft (20) interposed therebetween. The third radial electromagnet (41c) and the fourth radial electromagnet (41d) face each other with the shaft (20) interposed therebetween. The direction in which the third radial electromagnet (41c) and the fourth radial electromagnet (41d) face each other is orthogonal to a direction in which the first radial electromagnet (41a) and the second radial electromagnet (41b) face each other.

Specifically, the radial magnetic bearing (41) includes a core (410) and a plurality of windings (415). The core (410) is made of a magnetic material and is formed in a cylindrical shape. The core (410) includes a back yoke (411) formed in a cylindrical shape and a plurality of teeth (412) provided on an inner peripheral surface of the back yoke (411). The plurality of windings (415) are wound around the plurality of teeth (412). The windings (415) wound around the teeth (412) constitute a radial electromagnet.

An electromagnetic force for supporting the shaft (20) contactlessly in the radial direction of the radial magnetic bearing (41) is generated by energization of the windings (415) of the first to fourth radial electromagnets (41a to 41d). The position of the shaft (20) in the direction in which the first radial electromagnet (41a) and the second radial electromagnet (41b) face each other is controlled by controlling electric current that flows through the windings (415) of the first radial electromagnet (41a) and the second radial electromagnet (41b). The position of the shaft (20) in the direction in which the third radial electromagnet (41c) and the fourth radial electromagnet (41d) face each other is controlled by controlling electric current that flows through the windings (415) of the third radial electromagnet (41c) and the fourth radial electromagnet (41d).

In this example, the radial magnetic bearing (41) is disposed such that the axis of the radial magnetic bearing (41) coincides with the axis of the stator (32) of the bearingless motor (30).

### <Thrust Magnetic Bearing>

The thrust magnetic bearing (42) controls the axial position of the shaft (20) contactlessly by an electromagnetic force. As illustrated in Fig. 1, in this example, the thrust magnetic bearing (42) includes a first thrust electromagnet (42a) and a second thrust electromagnet (42b). The first thrust electromagnet (42a) and the second thrust electromagnet (42b) face each other with the disk portion (21) of the shaft (20) interposed therebetween.

Specifically, the first thrust electromagnet (42a) includes a core formed in an annular shape and a winding wound in an annular shape. For example, an annular groove is formed on the core of the first thrust electromagnet (42a), and a coil of the first thrust electromagnet (42a) is accommodated in the groove of the core of the first thrust electromagnet (42a). The configuration of the second thrust electromagnet (42b) is the same as the configuration of the first thrust electromagnet (42a).

An electromagnetic force for supporting the shaft (20) contactlessly in the axial direction of the thrust magnetic bearing (42) is generated by energization of the windings of the first thrust electromagnet (42a) and the second thrust electromagnet (42b). The position of the shaft (20) in the direction in which the first thrust electromagnet (42a) and the second thrust electromagnet (42b) face each other is controlled by controlling electric current that flows through the windings of the first thrust electromagnet (42a) and the second thrust electromagnet (42b).

### [Reference Position of Shaft]

For example, during the operation of the turbo compressor (1), the support portion (11) is controlled such that the position of the shaft (20) is at a predetermined reference position. In this example, the reference position is the position of the shaft (20) when the rotational axis of the shaft (20) coincides with a predetermined reference axis and the axial position of the shaft (20) is at a predetermined reference axial position. The reference axis is the axis of the stator (32) of the bearingless motor (30). The reference axial position is the central position of the disk portion (21) of the shaft (20) between the first thrust electromagnet (42a) and the second thrust electromagnet (42b) of the thrust magnetic bearing (42).

### [Touchdown Bearing]

When the shaft (20) is not supported contactlessly by the support portion (11), the touchdown bearing (50) is in contact with the shaft (20) and supports the shaft (20) such that the shaft (20) is rotatable. In this example, a radial touchdown bearing (51) and a radial thrust touchdown bearing (52) are provided as the touchdown bearing (50).

### <Radial Touchdown Bearing>

The radial touchdown bearing (51) is formed in an annular shape. The shaft (20) is inserted into the radial touchdown bearing (51). In this example, the radial touchdown bearing (51) is disposed between one end portion (the end portion to which the impeller (3) is fixed) of the shaft (20) and the bearingless motor (30). Specifically, the radial touchdown bearing (51) is disposed at the wall portion (2a) of the casing (2).

The radial touchdown bearing (51) is disposed such that the axis of the radial touchdown bearing (51) coincides with the reference axis (specifically, the axis of the stator (32) of the bearingless motor (30) and the axis of the radial magnetic bearing (41)). The inner diameter of the radial touchdown bearing (51) is smaller than the inner diameter (the diameter of an imaginary cylindrical surface in contact with the tips of the teeth (412)) of the radial magnetic bearing (41).

When the position of the shaft (20) is at the reference position, a gap between the radial thrust touchdown bearing (52) and the shaft (20) is narrower than each of "the gap between the radial magnetic bearing (41) and the shaft (20)" and "the gap between the rotor (31) and the stator (32) of the bearingless motor (30)".

In this example, the inner peripheral surface of the radial touchdown bearing (51) comes into contact with the shaft (20) that moves in the radial direction of the radial touchdown bearing (51), and the radial touchdown bearing (51) supports the shaft (20) such that the shaft (20) is rotatable. Further, the contact between the shaft (20) and the inner peripheral surface of the radial touchdown bearing (51) can avoid "contact between the rotor (31) and the stator (32) of the bearingless motor (30)" and "contact between the shaft (20) and the radial magnetic bearing (41)".

### <Radial Thrust Touchdown Bearing>

The radial thrust touchdown bearing (52) is formed in an annular shape. The shaft (20) is inserted into the radial thrust touchdown bearing (52). In this example, the radial thrust touchdown bearing (52) is disposed between the measurement target portion (25) of the shaft (20) and the thrust magnetic bearing (42). Specifically, the radial thrust touchdown bearing (52) is disposed to face the concave portion (22) of the shaft (20).

The radial thrust touchdown bearing (52) is disposed such that the axis of the radial thrust touchdown bearing (52) coincides with the reference axis (specifically, the axis of the stator (32) of the bearingless motor (30) and the axis of the radial magnetic bearing (41)).

In this example, the radial thrust touchdown bearing (52) faces the concave portion (22) of the shaft (20). Specifically, the inner peripheral surface of the radial thrust touchdown bearing (52) faces a bottom surface of the concave portion (22) of the shaft (20), and two end surfaces of the radial thrust touchdown bearing (52) in the axial direction face two side surfaces of the concave portion (22) of the shaft (20).

When the position of the shaft (20) is at the reference position, a gap between the radial thrust touchdown bearing (52) and the bottom surface of the concave portion (22) of the shaft (20) is narrower than each of "the gap between the radial magnetic bearing (41) and the shaft (20)" and "the gap between the rotor (31) and the stator (32) of the bearingless motor (30)".

When the position of the shaft (20) is at the reference position, a gap between the radial thrust touchdown bearing (52) and one side surface of the concave portion (22) of the shaft (20) is narrower than a gap between the first thrust electromagnet (42a) of the thrust magnetic bearing (42) and the disk portion (21) of the shaft (20). A gap between the radial thrust touchdown bearing (52) and another side surface of the concave portion (22) of the shaft (20) is narrower than a gap between the second thrust electromagnet (42b) of the thrust magnetic bearing (42) and the disk portion (21) of the shaft (20).

In this example, the inner peripheral surface of the radial thrust touchdown bearing (52) comes into contact with the bottom surface of the concave portion (22) of the shaft (20) that moves in the radial direction of the radial thrust touchdown bearing (52), and the radial thrust touchdown bearing (52) supports the shaft (20) such that the shaft (20) is rotatable. Further, the contact between the bottom surface of the concave portion (22) of the shaft (20) and the inner peripheral surface of the radial thrust touchdown bearing (52) can avoid "the contact between the rotor (31) and the stator (32) of the bearingless motor (30)" and "the contact between the shaft (20) and the radial magnetic bearing (41)".

Further, in this example, an end surface of the radial thrust touchdown bearing (52) in the axial direction comes into contact with a side surface of the concave portion (22) of the shaft (20) that moves in the axial direction of the radial thrust touchdown bearing (52), and the radial thrust touchdown bearing (52) supports the shaft (20) such that the shaft (20) is rotatable. Further, the contact between the side surface of the concave portion (22) of the shaft (20) and the radial thrust touchdown bearing (52) can avoid contact between the disk portion (21) of the shaft (20) and the thrust magnetic bearing (42).

### [Touchdown State]

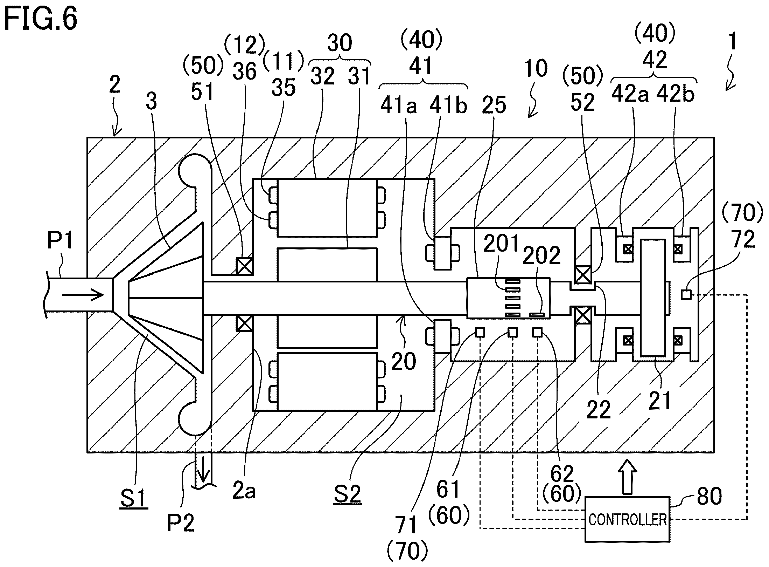

In the following description, a state in which the shaft (20) is in contact with the touchdown bearing (50) is referred to as "touchdown state". As illustrated in Fig. 6, in this example, the touchdown state is a state in which the shaft (20) is in contact with the radial touchdown bearing (51) and in which the bottom surface of the concave portion (22) of the shaft (20) is in contact with the radial thrust touchdown bearing (52).

### [Various Sensors]

The drive system (10) also includes various sensors such as the rotational-angle sensor (60), a position sensor (70), and an electric-current sensor (not shown).

### [Rotational-Angle Sensor]

The rotational-angle sensor (60) outputs a signal corresponding to a rotational angle of the measurement target portion (25) of the shaft (20). In this example, the rotational-angle sensor (60) is a gap sensor that outputs a signal corresponding to a distance to the measurement target portion (25). For example, this gap sensor is an eddy-current gap sensor.

Specifically, in this example, the first rotational-angle sensor (61) and the second rotational-angle sensor (62) are provided as the rotational-angle sensor (60). Each of the first rotational-angle sensor (61) and the second rotational-angle sensor (62) is a gap sensor that outputs a signal corresponding to a distance to a measurement target. As the distance between the gap sensor and the measurement target increases, the level (amplitude value) of a signal output from the gap sensor increases.

The first rotational-angle sensor (61) is disposed to face the first shaft portion (the shaft portion provided with the first step portions (201)) of the measurement target portion (25) of the shaft (20), and outputs a signal corresponding to a distance to the first shaft portion of the measurement target portion (25) of the shaft (20). As illustrated in Fig. 2, when the position of the shaft (20) is at the reference position, a distance (D11) between each first step portion

(201) of the first shaft portion and the first rotational-angle sensor (61) is longer than a distance (D10) between the remaining portion, excluding the first step portions (201), of the first shaft portion and the first rotational-angle sensor (61). Therefore, the level (amplitude value) of a signal output from the first rotational-angle sensor (61) is increased when the first rotational-angle sensor (61) faces the first step portions (201).

The second rotational-angle sensor (62) is disposed to face the second shaft portion (the shaft portion provided with the second step portion (202)) of the measurement target portion (25) of the shaft (20), and outputs a signal corresponding to a distance to the second shaft portion of the measurement target portion (25) of the shaft (20). As illustrated in Fig. 3, when the position of the shaft (20) is at the reference position, a distance (D21) between the second step portion

(202) of the second shaft portion and the second rotational-angle sensor (62) is longer than a distance (D20) between the remaining portion, excluding the second step portion (202), of the second shaft portion and the second rotational-angle sensor (62). Therefore, the level (amplitude value) of a signal output from the second rotational-angle sensor (62) is increased when the second rotational-angle sensor (62) faces the second step portion (202).

In this example, the first rotational-angle sensor (61) and the second rotational-angle sensor (62) are disposed vertically below the shaft (20). Further, the first rotational-angle sensor (61) and the second rotational-angle sensor (62) are disposed so as to face the reference axis.

### [Position Sensor]

The position sensor (70) outputs a signal corresponding to the position of the shaft (20). In this example, the position sensor (70) is a gap sensor that outputs a signal corresponding to a distance to the shaft (20).

Specifically, in this example, a radial position sensor (71) and a thrust position sensor (72) are provided as the position sensor (70). Each of the radial position sensor (71) and the thrust position sensor (72) is a gap sensor that outputs a signal corresponding to a distance to a measurement target. As the distance between the gap sensor and a measurement target increases, the level (amplitude value) of a signal output from the gap sensor increases.

The radial position sensor (71) outputs a signal corresponding to a radial position of the shaft (20). In this example, the radial position sensor (71) is disposed to face "a shaft portion (hereinafter referred to as "the cylindrical surface portion") where neither the first step portions (201) nor the second step portion (202) is provided" of the measurement target portion (25) of the shaft (20), and outputs a signal corresponding to a distance to the cylindrical surface portion of the measurement target portion (25) of the shaft (20).

As the radial position sensor (71), two types of radial position sensors (a first radial position sensor (71) and a second radial position sensor (71)) are provided. The first radial position sensor (71) outputs a signal corresponding to the position of the shaft (20) in a direction in which the first radial electromagnet (41a) and the second radial electromagnet (41b) of the radial magnetic bearing (41) face each other. The second radial position sensor (71) outputs a signal corresponding to the position of the shaft (20) in a direction in which the third radial electromagnet (41c) and the fourth radial electromagnet (41d) of the radial magnetic bearing (41) face each other. The radial position sensor (71) is disposed to face the reference axis.

The thrust position sensor (72) outputs a signal corresponding to the axial position of the shaft (20). In this example, the thrust position sensor (72) is disposed to face another end surface of the shaft (20), and outputs a signal corresponding to a distance to the other end surface of the shaft (20).

### [Controller]

The drive system (10) includes a controller (80). The controller (80) is connected by signal lines to various sensors provided in the drive system (10), and receives signals output from the various sensors. The controller (80) is connected to a component of the drive system (10) by a signal line and controls the component of the drive system (10). In this example, the controller (80) is connected by signal lines to the bearingless motor (30), the radial magnetic bearing (41), the thrust magnetic bearing (42), the first rotational-angle sensor (61), the second rotational-angle sensor (62), the radial position sensor (71), and the thrust position sensor (72).

Further, the controller (80) receives various instructions, such as a start instruction for starting an operation. Then, the controller (80) performs various processes on the basis of various instructions and signals output from various sensors.

For example, the controller (80) includes a processor, a memory that is electrically connected to the processor and stores a program for actuating the processor, a power supply unit that supplies electric power in accordance with an instruction from the processor, and the like.

### [Position Control]

The controller (80) performs float position control when the shaft (20) is supported by the support portion (11) contactlessly. In the float position control, the controller (80) detects the position of the shaft (20) on the basis of a signal output from the position sensor (70) and controls the support portion (11) such that the position of the shaft (20) is at a predetermined reference position.

Specifically, the controller (80) detects the radial position (the position of the rotational axis) of the shaft (20) on the basis of a signal output from the radial position sensor (71) and controls electric current that flows through the support windings (35) of the bearingless motor (30) and electric current that flows through the windings (415) of the radial magnetic bearing (41) such that the radial position of the shaft (20) is at a predetermined reference radial position (the position of the reference axis). Further, the controller (80) detects the axial position of the shaft (20) on the basis of a signal output from the thrust position sensor (72) and controls electric current that flows through the winding of the thrust magnetic bearing (42) such that the axial position of the shaft (20) is at the predetermined reference axial position.

### [Detection of Rotational Angle]

Further, when the shaft (20) is rotationally driven by the drive portion (12), the controller (80) detects the rotational angle of the shaft (20) on the basis of a signal output from the rotational-angle sensor (60). In this example, the controller (80) detects the rotational angle of the shaft (20) as follows.

The controller (80) detects a change in the rotational angle of the shaft (20) on the basis of a signal output from the first rotational-angle sensor (61). Hereinafter, a signal output from the first rotational-angle sensor (61) is referred to as "first sensor signal (SS1)".

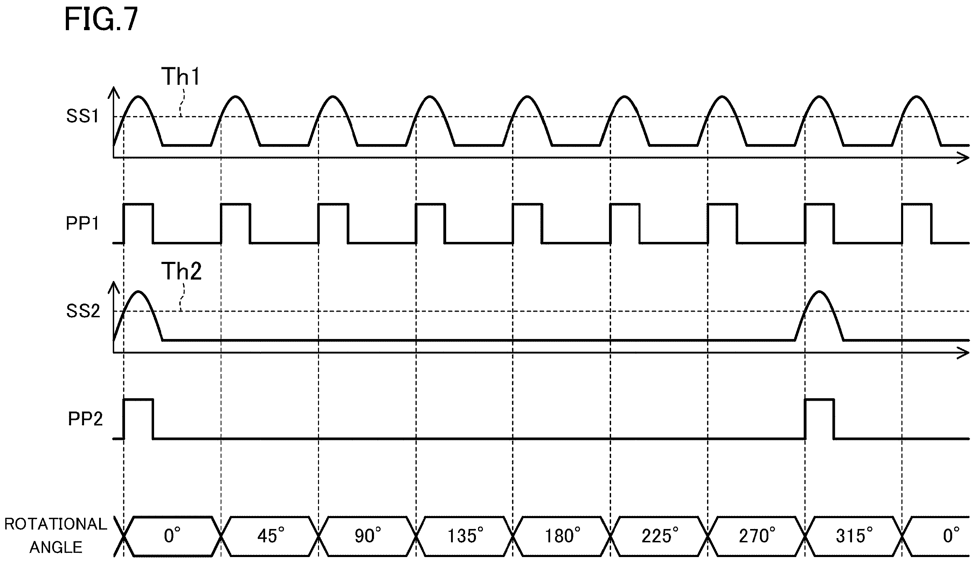

Specifically, as illustrated in Fig. 7, the controller (80) compares the level (amplitude value) of the first sensor signal (SS1) with a predetermined first threshold (Th1) and generates a first result signal (PP1) in accordance with a result of the comparison. The controller (80) changes the level of the first result signal (PP1) from a low level to a high level when the level of the first sensor signal (SS1) is higher than the first threshold (Th1) and changes the level of the first result signal (PP1) from a high level to a low level when the level of the first sensor signal (SS1) is lower than the first threshold (Th1).

For example, the first threshold (Th1) is set to a level that is lower than the level of the first sensor signal (SS1) when the first rotational-angle sensor (61) faces the first step portions (201) of the first shaft portion of the measurement target portion (25) of the shaft (20) and that is higher than the level of the first sensor signal (SS1) when the first rotational-angle sensor (61) faces the remaining portion, excluding the first step portions (201), of the first shaft portion of the measurement target portion (25) of the shaft (20).

Further, the controller (80) detects the rotation reference (reference of the rotational angle) of the shaft (20) on the basis of a signal output from the second rotational-angle sensor (62). Hereinafter, a signal output from the second rotational-angle sensor (62) is referred to as "second sensor signal (SS2)".

Specifically, as illustrated in Fig. 7, the controller (80) compares the level (amplitude value) of the second sensor signal (SS2) with a predetermined second threshold (Th2) and generates a second result signal (PP2) in accordance with a result of the comparison. The controller (80) changes the level of the second result signal (PP2) from a low level to a high level when the level of the second sensor signal (SS2) is higher than the second threshold (Th2) and changes the level of the second result signal (PP2) from a high level to a low level when the level of the second sensor signal (SS2) is lower than the second threshold (Th2).

For example, the second threshold (Th1) is set to a level that is lower than the level of the second sensor signal (SS2) when the second rotational-angle sensor (62) faces the second step portion (202) of the second shaft portion of the measurement target portion (25) of the shaft (20) and that is higher than the level of the second sensor signal (SS2) when the second rotational-angle sensor (62) faces the remaining portion, excluding the second step portion (202), of the second shaft portion of the measurement target portion (25) of the shaft (20).

Then, the controller (80) detects the rotational angle of the shaft (20) on the basis of the "change in the rotational angle of the shaft (20)", which is detected on the basis of the first sensor signal (SS1), and the "rotation reference of the shaft (20)", which is detected on the basis of the second sensor signal (SS2).

Specifically, as illustrated in Fig. 7, when the level of the second result signal (PP2) changes from a low level to a high level, the controller (80) sets the rotational angle of the shaft (20) to "0°". Then, the controller (80) increases the rotational angle of the shaft (20) by a predetermined amount (45° in this example) each time when the level of the first result signal (PP1) changes from a low level to a high level. The rotational angle of the shaft (20) is thus detected.

### [Starting Process]

In addition, the controller (80) performs a starting process before the shaft (20) is supported contactlessly by the support portion (11). In the starting process, the controller (80) controls the drive portion (12) to rotate the shaft (20) in a state in which the shaft (20) is in contact with the touchdown bearing (50), and the controller (80) detects the rotational angle of the shaft (20) on the basis of a signal output from the rotational-angle sensor (60).

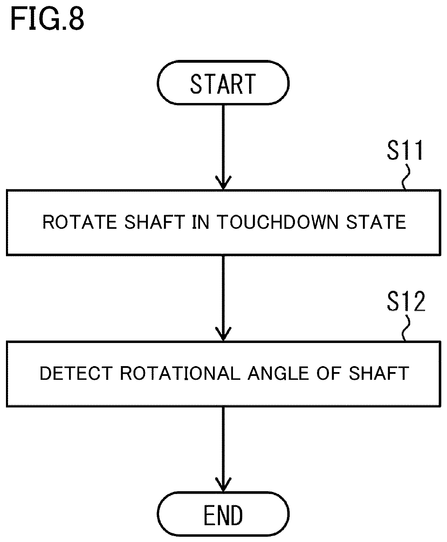

Next, the starting process will be described with reference to Fig. 8. For example, when the controller (80) receives a start instruction for starting an operation, the controller (80) performs the following action.

### <Step (ST11)>

First, the controller (80) controls the drive portion (12) to rotate the shaft (20) in a state in which the shaft (20) is in contact with the touchdown bearing (50). The controller (80) also controls the drive portion (12) such that the rotational speed of the shaft (20) rotating in the state of being in contact with the touchdown bearing (50) becomes constant.

In this example, the controller (80) supplies electric current to the drive winding (36) of the bearingless motor (30). Consequently, the shaft (20) rotates in the touchdown state. Then, the controller (80) controls electric current that is supplied to the drive winding (36) of the bearingless motor (30) such that the rotational speed of the shaft (20) becomes constant.

### <Step (ST12)>

Next, the controller (80) detects the rotational angle of the shaft (20) on the basis of a signal output from the rotational-angle sensor (60). In this example, the controller (80) detects the rotational angle of the shaft (20) on the basis of the first sensor signal (SS1) output from the first rotational-angle sensor (61) and the second sensor signal (SS2) output from the second rotational-angle sensor (62).

When the detection of the rotational angle of the shaft (20) is completed, the controller (80) ends the starting process. When the starting process is ended, the controller (80) controls the support portion (11) such that the support portion (11) supports the shaft (20) contactlessly.

### [Effects in Embodiment]

As described above, in the embodiment, the controller (80) performs the starting process before the shaft (20) is supported contactlessly by the support portion (11). In the starting process, the controller (80) detects the rotational angle of the shaft (20) in the state in which the shaft (20) is in contact with the touchdown bearing (50). Specifically, in the starting process, the controller (80) controls the drive portion (12) to rotate the shaft (20) in the state in which the shaft (20) is in contact with the touchdown bearing (50), and the controller (80) detects the rotational angle of the shaft (20) on the basis of a signal output from the rotational-angle sensor (60).

With the aforementioned configuration, the rotational angle of the shaft (20) can be detected before the shaft (20) is supported contactlessly.

In addition, by detecting the rotational angle of the shaft (20) before the shaft (20) is supported contactlessly, it is possible to perform, at the time of starting support of the shaft (20) by the support portion (11) contactlessly, control in accordance with the rotational angle of the shaft (20).

For example, when the bearingless motor (30) is used to start support of the shaft (20) contactlessly, the position of the magnetic pole of the rotor (31) fixed to the shaft (20) can be detected on the basis of the rotational angle of the shaft (20). Consequently, it is possible to appropriately control the electric current that flows through the support windings (35) of the bearingless motor (30) to generate an electromagnetic force (an electromagnetic force that can move the shaft (20) toward the reference position) for supporting the shaft (20) contactlessly.

In addition, by detecting the rotational angle of the shaft (20), it is possible to appropriately control the electric current that flows through the drive windings (36) of the bearingless motor (30) to generate an electromagnetic force for rotationally driving the shaft (20).

Thus, control (float control) for supporting the shaft (20) contactlessly and control (rotation control) for rotationally driving the shaft (20) can be stably performed.

In the embodiment, the rotational-angle sensor (60) is a gap sensor that outputs a signal corresponding to a distance to the measurement target portion (25) of the shaft (20). The measurement target portion (25) of the shaft (20) is configured such that the distance to the rotational-angle sensor (60) changes in accordance with a change in the rotational angle of the shaft (20).

With the aforementioned configuration, when the rotational angle of the shaft (20) changes, the distance between the measurement target portion (25) of the shaft (20) and the rotational-angle sensor (60) changes, and, as a result, the signal output from the rotational-angle sensor (60) changes. Therefore, the rotational angle of the shaft (20) can be detected on the basis of the signal output from the rotational-angle sensor (60).

### (Modification 1 of Embodiment)

The turbo compressor (1) in Modification 1 of the embodiment is different from the turbo compressor (1) in the embodiment in terms of the arrangement and the performance of the rotational-angle sensor (60). Other configurations and processes of the turbo compressor (1) in Modification 1 of the embodiment are the same as the configurations and the processes of the turbo compressor (1) in the embodiment.

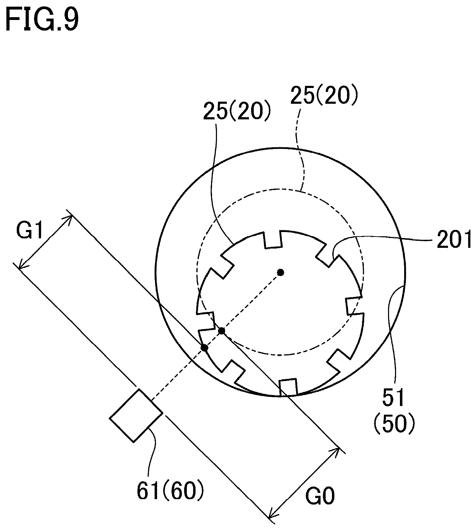

As illustrated in Fig. 9, in Modification 1 of the embodiment, the rotational-angle sensor (60) is disposed such that "a distance (G1) between the rotational-angle sensor (60) and the measurement target portion (25) of the shaft (20) when the shaft (20) is not supported contactlessly by the support portion (11)" is smaller than or equal to "a distance (G0) between the rotational-angle sensor (60) and the measurement target portion (25) of the shaft (20) when the position of the shaft (20) supported contactlessly by the support portion (11) is at the reference position". Specifically, the first rotational-angle sensor (61) and the first rotational-angle sensor (61) are disposed as follows.

The first rotational-angle sensor (61) is disposed such that "the distance (G1) between the first rotational-angle sensor (61) and the first shaft portion (the shaft portion provided with the first step portions (201) of the measurement target portion (25) of the shaft (20) when the shaft (20) is not supported contactlessly by the support portion (11)" is smaller than or equal to "the distance (G0) between the first rotational-angle sensor (61) and the first shaft portion of the measurement target portion (25) of the shaft (20) when the positon of the shaft (20) supported contactlessly by the support portion (11) is at the reference position".

The second rotational-angle sensor (62) is disposed such that "a distance between the second rotational-angle sensor (62) and the second shaft portion (the shaft portion provided with the second step portion (202)) of the measurement target portion (25) of the shaft (20) when the shaft (20) is not supported contactlessly by the support portion (11)" is smaller than or equal to "a distance between the second rotational-angle sensor (62) and the second shaft portion of the measurement target portion (25) of the shaft (20) when the position of the shaft (20) supported contactlessly by the support portion (11) is at the reference position".

In Modification 1 of the embodiment, the dynamic range of the rotational-angle sensor (60) is the same as the dynamic range of the position sensor (70). Specifically, the dynamic range of each of the gap sensors that are the first rotational-angle sensor (61) and the second rotational-angle sensor (62) is the same as the dynamic range of the gap sensor that is the radial position sensor (71).

### [Output Characteristics of Gap Sensor]

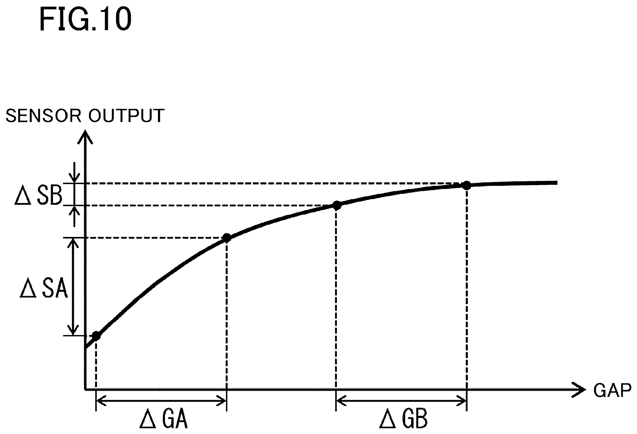

In Fig. 10, output characteristics of a gap sensor are shown as examples. The horizontal axis represents the distance (gap) between the gap sensor and a measurement target, and the vertical axis represents the level (amplitude value) of a signal output from the gap sensor. Hereinafter, a change in the distance between the gap sensor and the measurement target is referred to as "distance change", and a change in the level of the signal output from the gap sensor is referred to as "signal change".

As illustrated in Fig. 10, as the distance between the gap sensor and the measurement target decreases, the signal change corresponding to the distance change of the gap sensor increases. For example, assuming that the distance change when the distance between the gap sensor and the measurement target is relatively short is "first distance change (ΔGA)" and a distance change when the distance between the gap sensor and the measurement target is relatively long is "second distance change (ΔGB)", a first signal change (ΔSA) corresponding to the first distance change (ΔGA) is larger than a second signal change (ΔSB) corresponding to the second distance change (ΔGB). The amount of a change in the second distance change (ΔGB) is the same as the amount of a change in the first distance change (ΔGA).

As described above, as the distance between the gap sensor and the measurement target decreases, the signal change corresponding to the distance change of the gap sensor increases. Therefore, as the distance between the rotational-angle sensor (60), which is a gap sensor, and the measurement target portion (25) of the shaft (20) decreases, the signal change corresponding to the distance change of the rotational-angle sensor (60) increases and, as a result, improves accuracy of detection of the rotational angle of the shaft (20) on the basis of the signal output from the rotational-angle sensor (60).

### [Effects in Modification 1 of Embodiment]

As described above, in Modification 1 of the embodiment, the rotational-angle sensor (60) is disposed such that "the distance (G1) between the rotational-angle sensor (60) and the measurement target portion (25) of the shaft (20) when the shaft (20) is not supported contactlessly by the support portion (11)" is less than or equal to "the distance (G0) between the rotational-angle sensor (60) and the measurement target portion (25) of the shaft (20) when the position of the shaft (20) supported contactlessly by the support portion (11) is at the reference position".

With the aforementioned configuration, in the starting process in which the shaft (20) is in the touchdown state (state of being in contact with the touchdown bearing (50)), the distance between the rotational-angle sensor (60) and the measurement target portion (25) of the shaft (20) can be made less than or equal to the distance (G0) between the rotational-angle sensor (60) and the measurement target portion (25) of the shaft (20) when the position of the shaft (20) supported by the support portion (11) contactlessly is at the reference position. Consequently, in the starting process, the signal change corresponding to the distance change of the rotational-angle sensor (60) can be avoided to be excessively small. It is thus possible to suppress a decrease in the accuracy of the process of detecting the rotational angle of the shaft (20) on the basis of an output signal of the rotational-angle sensor (60).

In Modification 1 of the embodiment, the dynamic range of the rotational-angle sensor (60) is the same as the dynamic range of the position sensor (70).

With the aforementioned configuration, the type of the gap sensor serving as the rotational-angle sensor (60) and the type of the gap sensor serving as the position sensor (70) can be unified. In other words, the rotational-angle sensor (60) and the position sensor (70) can be configured using the same type of gap sensors. Consequently, procurement costs of the sensors can be reduced.

### (Modification 2 of Embodiment)

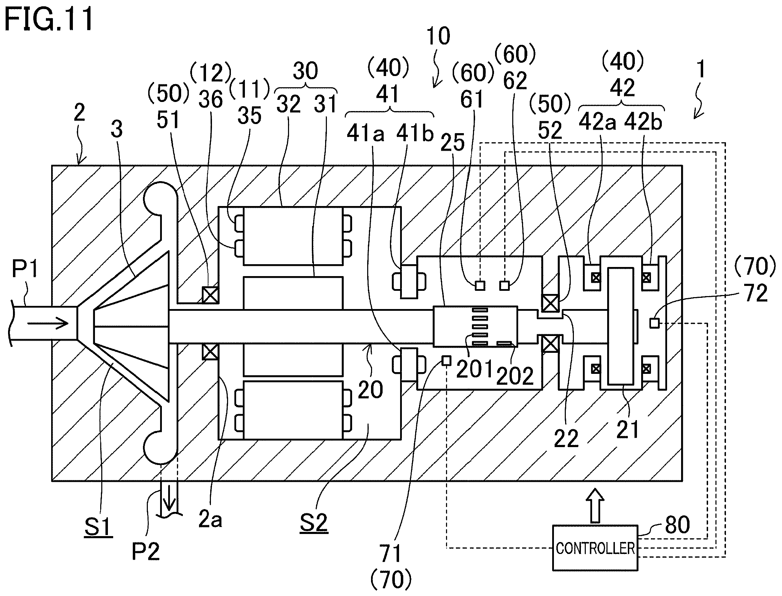

In Fig. 11, a configuration of the turbo compressor (1) in Modification 2 of the embodiment is illustrated as an example. The turbo compressor (1) in Modification 2 of the embodiment is different from the turbo compressor (1) in the embodiment in terms of the arrangement of the rotational-angle sensor (60) and the starting process. Other configurations and processes of the turbo compressor (1) in Modification 2 of the embodiment are the same as the configurations and the processes of the turbo compressor (1) in the embodiment. In Fig. 11, the shaft (20) is in the touchdown state.

In Modification 2 of the embodiment, the distance between the rotational-angle sensor (60) and the measurement target portion (25) of the shaft (20) when the shaft (20) is in the touchdown state is longer than the distance between the rotational-angle sensor (60) and the measurement target portion (25) of the shaft (20) when the position of the shaft (20) is at the reference position. In this example, the first rotational-angle sensor (61) and the second rotational-angle sensor (62) are disposed vertically above the shaft (20).

In Modification 2 of the embodiment, the controller (80) controls the support portion (11) in the starting process such that the shaft (20) is moved by an electromagnetic force and the measurement target portion (25) of the shaft (20) approaches the rotational-angle sensor (60).

In Modification 2 of the embodiment, the controller (80) controls, while controlling the support portion (11) such that a state in which the measurement target portion (25) of the shaft (20) is close to the rotational-angle sensor (60) is maintained, the drive portion (12) in the starting process to rotate the shaft (20).

### [Approached State]

In the following description, a state in which the measurement target portion (25) of the shaft (20) is close to the rotational-angle sensor (60) is referred to as "approached state". In the approached state, the shaft (20) is in contact with the touchdown bearing (50).

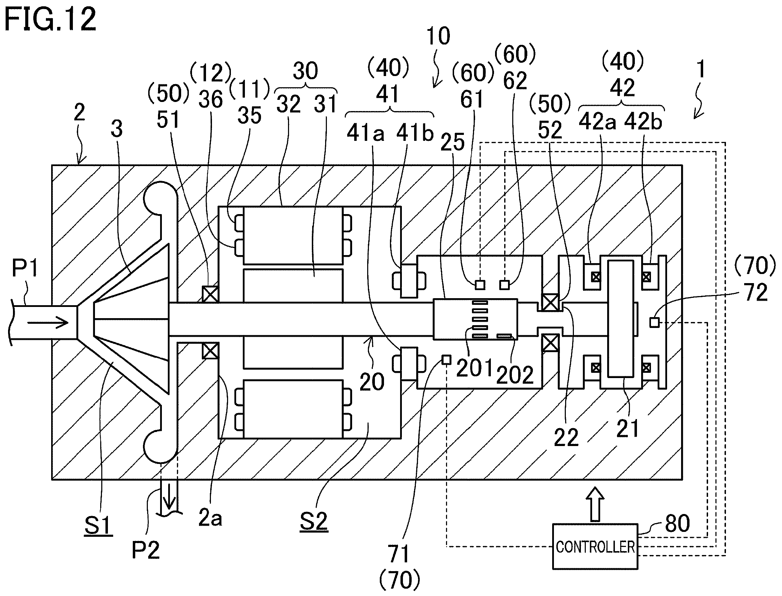

As illustrated in Fig. 12, the approached state of the shaft (20) in this example is a state in which the shaft (20) is moved vertically upward by the electromagnetic force of the support portion (11) and the measurement target portion (25) of the shaft (20) is closer to the rotational-angle sensor (60) than in the touchdown state at the start of the starting process. When the shaft (20) is in the approached state, the radial touchdown bearing (51) is in contact with the shaft (20), and the radial thrust touchdown bearing (52) is in contact with the bottom surface of the concave portion (22) of the shaft (20).

In this example, the distance between the rotational-angle sensor (60) and the measurement target portion (25) of the shaft (20) when the shaft (20) is in the approached state is less than or equal to the distance (G0) (see Fig. 9) between the rotational-angle sensor (60) and the measurement target portion (25) of the shaft (20) when the position of the shaft (20) supported by the support portion (11) contactlessly is at the reference position.

Specifically, the distance between the first rotational-angle sensor (61) and the first shaft portion (the shaft portion provided with the first step portions (201) of the measurement target portion (25) of the shaft (20) when the shaft (20) is in the approached state is less than or equal to the distance (G0) between the first rotational-angle sensor (61) and the first shaft portion of the measurement target portion (25) of the shaft (20) when the position of the shaft (20) supported by the support portion (11) contactlessly is at the reference position.

The distance between the second rotational-angle sensor (62) and the second shaft portion (the shaft portion provided with the second step portion (202)) of the measurement target portion (25) of the shaft (20) when the shaft (20) is in the approached state is less than or equal to the distance between the second rotational-angle sensor (62) and the second shaft portion of the measurement target portion (25) of the shaft (20) when the position of the shaft (20) supported by the support portion (11) contactlessly is at the reference position.

### [Starting Process]

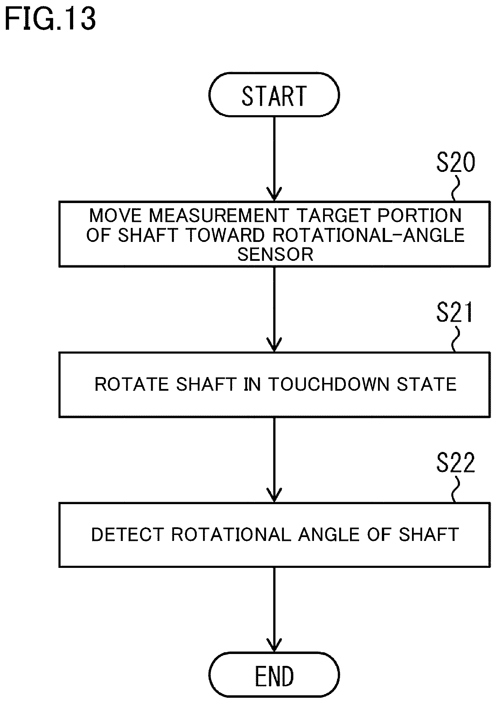

Next, with reference to Fig. 13, the starting process in Modification 2 of the embodiment will be described. For example, when the controller (80) receives a start instruction for starting an operation, the controller (80) performs the following action.

### <Step (S20)>

First, the controller (80) controls the support portion (11) such that the shaft (20) is moved by an electromagnetic force and the measurement target portion (25) of the shaft (20) approaches the rotational-angle sensor (60).

In this example, the controller (80) supplies electric current to the windings (415) of the radial magnetic bearing (41) to generate an electromagnetic force for moving the shaft (20) vertically upward, and controls the electric current that is supplied to the windings (415) of the radial magnetic bearing (41). Consequently, the shaft (20) moves vertically upward into the approached state (see Fig. 12).

### <Step (S21)>

Next, in the starting process, the controller (80) controls, while controlling the support portion (11) such that the state in which the measurement target portion (25) of the shaft (20) is close to the rotational-angle sensor (60) is maintained, the drive portion (12) to rotate the shaft (20). The controller (80) also controls the drive portion (12) such that the rotational speed of the shaft (20) rotating in a state of being in contact with the touchdown bearing (50) becomes constant.

In this example, the controller (80) supplies electric current to the drive windings (36) of the bearingless motor (30) while continuing supplying of electric current to the windings (415) of the radial magnetic bearing (41). Consequently, the shaft (20) rotates in the approached state. Then, the controller (80) controls the electric current that is supplied to the drive windings (36) of the bearingless motor (30) such that the rotational speed of the shaft (20) becomes constant.

### <Step (S22)>

Next, as in the step (S12), the controller (80) detects the rotational angle of the shaft (20) on the basis of a signal output from the rotational-angle sensor (60). When the detection of the rotational angle of the shaft (20) is completed, the controller (80) ends the starting process. When the starting process is ended, the controller (80) controls the support portion (11) such that the support portion (11) supports the shaft (20) contactlessly.

### [Effects in Modification 2 of Embodiment]

As described above, in the starting process in Modification 2 of the embodiment, the controller (80) controls the support portion (11) such that the shaft (20) is moved by an electromagnetic force and the measurement target portion (25) of the shaft (20) approaches the rotational-angle sensor (60).

With the aforementioned configuration, in the starting process, the distance between the rotational-angle sensor (60) and the measurement target portion (25) of the shaft (20) can be made shorter than the distance between the rotational-angle sensor (60) and the measurement target portion (25) of the shaft (20) at the start of the starting process. Consequently, in the starting process, the signal change corresponding to the distance change of the rotational-angle sensor (60) can be increased, and accuracy of the process of detecting the rotational angle of the shaft (20) on the basis of an output signal of the rotational-angle sensor (60) can be improved.

In Modification 2 of the embodiment, in the starting process, the controller (80) controls, while controlling the support portion (11) such that a state in which the measurement target portion (25) of the shaft (20) is close to the rotational-angle sensor (60) is maintained, the drive portion (12) to rotate the shaft (20).

With the aforementioned configuration, a state in which the distance between the rotational-angle sensor (60) and the measurement target portion (25) of the shaft (20) is shorter than the "distance between the rotational-angle sensor (60) and the measurement target portion (25) of the shaft (20) at the start of the starting process" can be maintained in the starting process. Consequently, a state in which the signal change corresponding to the distance change of the rotational-angle sensor (60) is large can be maintained in the starting process. It is thus possible to continuously improve accuracy of the process of detecting the rotational angle of the shaft (20) on the basis of an output signal of the rotational-angle sensor (60).

In Modification 2 of the embodiment, the dynamic range of the rotational-angle sensor (60) may be the same as the dynamic range of the position sensor (70). Specifically, the dynamic range of each of the gap sensors that are the first rotational-angle sensor (61) and the second rotational-angle sensor (62) may be the same as the dynamic range of the gap sensor that is the radial position sensor (71).

### (Modification 3 of Embodiment)

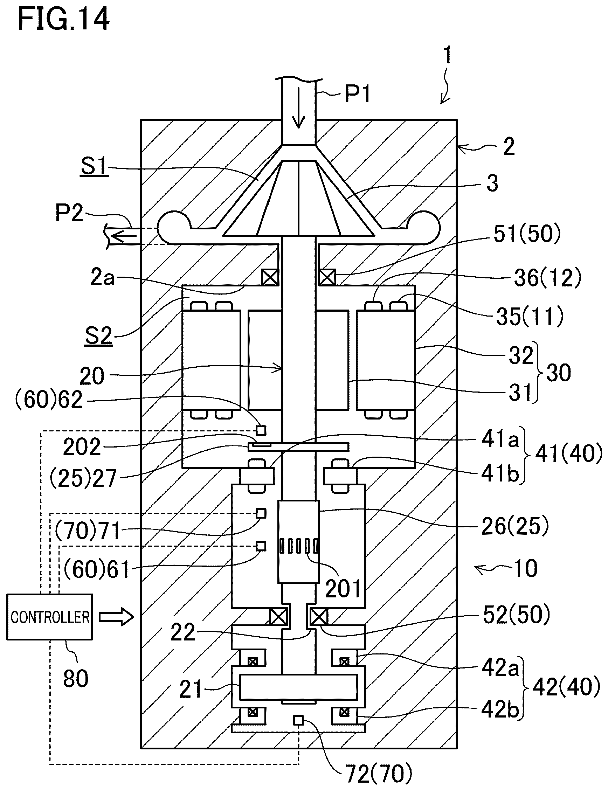

In Fig. 14, a configuration of the turbo compressor (1) in Modification 3 of the embodiment is illustrated as an example. The turbo compressor (1) in Modification 3 of the embodiment is different from the turbo compressor (1) in the embodiment in terms of "the orientation of the turbo compressor 1", "the measurement target portion (25) of the shaft (20)", "the arrangement of the second rotational-angle sensor (62)", and "the starting process". Other configurations and processes of the turbo compressor (1) in Modification 3 of the embodiment are the same as the configurations and the processes of the turbo compressor (1) in the embodiment.

### [Orientation of Turbo Compressor]

In Modification 3 of the embodiment, the casing (2) is disposed such that the axis (the axis of the cylinder) of the casing (2) is vertical. In this example, the casing (2) is disposed such that one end portion (the end portion to which the impeller (3) is fixed) of the shaft (20) is on the upper side.

### [Measurement Target Portion of Shaft]

In Modification 3 of the embodiment, the measurement target portion (25) of the shaft (20) includes a first measurement target portion (26) and a second measurement target portion (27). The first measurement target portion (26) is provided between one end portion of the shaft (20) and the concave portion (22). The second measurement target portion (27) is provided between one end portion of the shaft (20) and the first measurement target portion (26). In this example, the first measurement target portion (26) is provided between the radial magnetic bearing (41) and the concave portion (22) of the shaft (20). The second measurement target portion (27) is provided between the bearingless motor (30) and the radial magnetic bearing (41).

The first measurement target portion (26) is configured such that a distance to the first rotational-angle sensor (61) changes in accordance with a change in the rotational angle of the shaft (20). Specifically, the first measurement target portion (26) is formed in a shaft shape. The first measurement target portion (26) is provided with a plurality of first step portions (201). The shaft portion of the first measurement target portion (26) of the shaft (20) where the first step portions (201) are provided is a measurement target of the first rotational-angle sensor (61).

The second measurement target portion (27) is configured such that a distance to the second rotational-angle sensor (62) changes in accordance with a change in the rotational angle of the shaft (20). Specifically, the second measurement target portion (27) is formed in a disk shape. A second step portion

(202) is provided on one end surface (the side surface on the upper side) of the second measurement target portion (27) in the axial direction. The second measurement target portion (27) is a measurement target of the second rotational-angle sensor (62).

### [Second Rotational-Angle Sensor]

In Modification 3 of the embodiment, the second rotational-angle sensor (62) is disposed to face one end surface (the side surface on the upper side) of the second measurement target portion (27) in the axial direction and outputs a signal corresponding to the distance to the one end surface of the second measurement target portion (27) in the axial direction. When the position of the shaft (20) is at the reference position, the distance between the second step portion (202) of the one end surface of the second measurement target portion (27) in the axial direction and the second rotational-angle sensor (62) is longer than the distance (D20) between the remaining portion, excluding the second step portion (202), of the one end surface of the second measurement target portion (27) in the axial direction and the second rotational-angle sensor (62). Therefore, the level (amplitude value) of a signal output from the second rotational-angle sensor (62) increases when the second rotational-angle sensor (62) faces the second step portion (202).

### [Touchdown State]

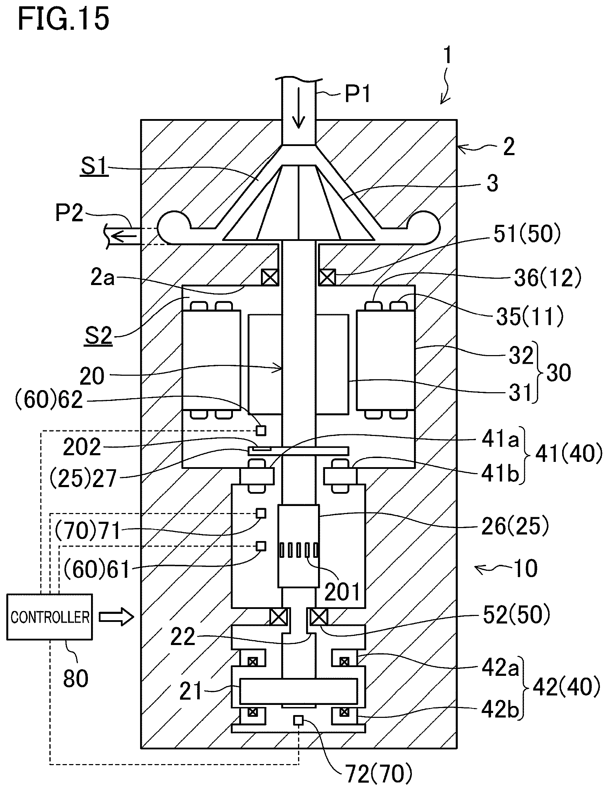

As illustrated in Fig. 15, in Modification 3 of the embodiment, the touchdown state of the shaft (20) is a state in which one side surface (the side surface on the upper side) of the concave portion (22) of the shaft (20) is in contact with the radial thrust touchdown bearing (52).

### [Approached State]

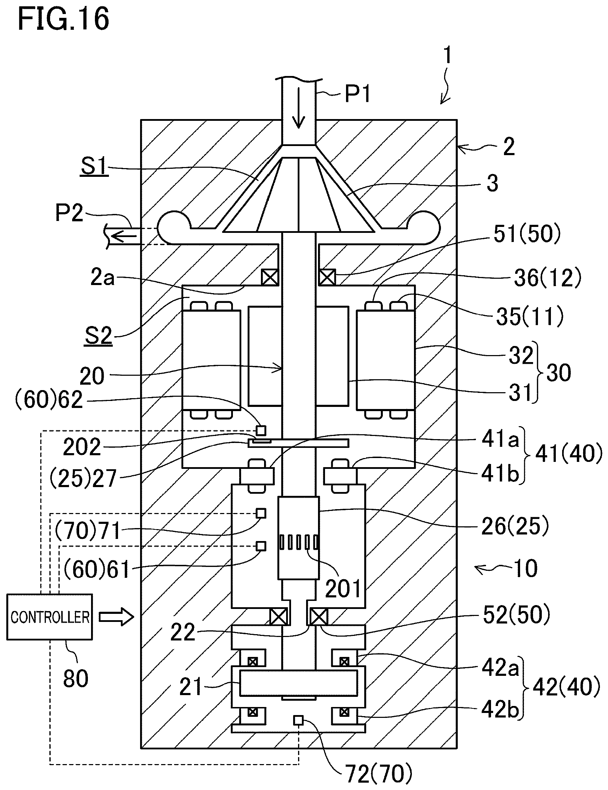

As illustrated in Fig. 16, in Modification 3 of the embodiment, the approached state of the shaft (20) is a state in which the shaft (20) is moved vertically upward by the electromagnetic force of the support portion (11) and the second measurement target portion (27) of the shaft (20) is closer to the second rotational-angle sensor (62) than in the touchdown state at the start of the starting process.

In Modification 3 of the embodiment, the thrust magnetic bearing (42) functions as the support portion (11) that supports the shaft (20) contactlessly by an electromagnetic force. The thrust magnetic bearing (42) is an example of the support portion (11).

### [Starting Process]

The starting process in Modification 3 of the embodiment is the same as the starting process (see Fig. 13) in Modification 2 of the embodiment. In the starting process, the controller (80) controls the support portion (11) such that the shaft (20) is moved by an electromagnetic force and the measurement target portion (25) of the shaft (20) approaches the rotational-angle sensor (60). In the starting process, the controller (80) also controls, while controlling the support portion (11) such that the state in which the measurement target portion (25) of the shaft (20) is close to the rotational-angle sensor (60) is maintained, the drive portion (12) to rotate the shaft (20).

Specifically, first, in the step (S20), the controller (80) supplies electric current to the winding of the thrust magnetic bearing (42) so as to generate an electromagnetic force for moving the shaft (20) vertically upward and controls the electric current that is supplied to the winding of the thrust magnetic bearing (42). Consequently, the shaft (20) moves vertically upward into the approached state (see Fig. 16).

Next, in a step (S21), the controller (80) supplies electric current to the drive winding (36) of the bearingless motor (30) while continuing supplying of the electric current to the winding of the thrust magnetic bearing (42). Consequently, the shaft (20) rotates in the approached state. Then, the controller (80) controls the electric current that is supplied to the drive winding (36) of the bearingless motor (30) such that the rotational speed of the shaft (20) becomes constant.

Next, in a step (S22), the controller (80) detects the rotational angle of the shaft (20) on the basis of a signal output from the rotational-angle sensor (60). When the detection of the rotational angle of the shaft (20) is completed, the controller (80) ends the starting process. When the starting process is ended, the controller (80) controls the support portion (11) such that the support portion (11) supports the shaft (20) contactlessly.

### [Effects in Modification 3 of Embodiment]

In Modification 3 of the embodiment, the same effects as those in Modification 2 of the embodiment can be obtained.

In Modification 3 of the embodiment, the dynamic range of the rotational-angle sensor (60) may be the same as the dynamic range of the position sensor (70). Specifically, the dynamic range of the gap sensor that is the first rotational-angle sensor (61) may be the same as the dynamic range of the gap sensor that is the radial position sensor (71). The dynamic range of the gap sensor that is the second rotational-angle sensor (62) may be the same as the dynamic range of the gap sensor that is the thrust position sensor (72).

In the step (S20) in Modification 3 of the embodiment, the controller (80) may control, while controlling the thrust magnetic bearing (42) to generate an electromagnetic force for moving the shaft (20) vertically upward, the radial magnetic bearing (41) to generate an electromagnetic force for moving the shaft (20) toward (leftward in the example in Fig. 16) the first rotational-angle sensor (61). Consequently, in the starting process, the first measurement target portion (26) of the shaft (20) can be brought closer to the first rotational-angle sensor (61), and the second measurement target portion (27) of the shaft (20) can be brought closer to the second rotational-angle sensor (62).

In Modification 3 of the embodiment, the casing (2) may be disposed such that the axis (the axis of the cylinder) of the casing (2) is horizontal. In this case, in the starting process, the controller (80) may control the support portion (11) such that the first shaft portion (the shaft portion provided with the first step portions (201) of the first measurement target portion (26) of the shaft (20) approaches the first rotational-angle sensor (61) and the second measurement target portion (27) of the shaft (20) approaches the second rotational-angle sensor (62). Specifically, in the starting process, the controller (80) may control the radial magnetic bearing (41) such that the first shaft portion of the first measurement target portion (26) of the shaft (20) approaches the first rotational-angle sensor (61) and control the thrust magnetic bearing (42) such that the second measurement target portion (27) of the shaft (20) approaches the second rotational-angle sensor (62).

### (Modification 4 of Embodiment)

The turbo compressor (1) in Modification 4 of the embodiment is different from the turbo compressor (1) in the embodiment in terms of "the measurement target portion (25) of the shaft (20)", "the rotational-angle sensor (60)", and "the process for detecting the rotational angle of the shaft (20)". Other configurations and processes of the turbo compressor (1) in Modification 4 of the embodiment are the same as the configurations and the processes of the turbo compressor (1) in the embodiment.

### [Measurement Target Portion of Shaft]

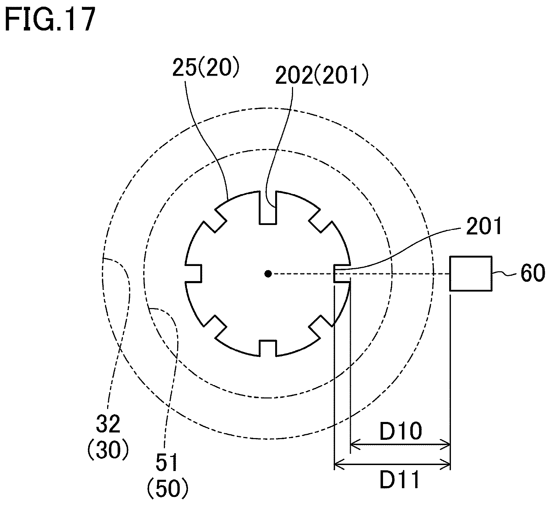

In Modification 4 of the embodiment, one of the plurality of first step portions (201) provided at the measurement target portion (25) of the shaft (20) also serves as the second step portion (202). As illustrated in Fig. 17, the first step portions (201) are concave portions in this example. The first step portion (201) used also as the second step portion (202) is a concave portion deeper than the other first step portions (201) not used also as the second step portion (202). In Modification 4 of the embodiment, the second shaft portion (the shaft portion provided with only the second step portion (202)) of the measurement target portion (25) of the shaft (20) is omitted.

### [Rotational-Angle Sensor]

In Modification 4 of the embodiment, the rotational-angle sensor (60) is constituted by one rotational-angle sensor. In this example, the rotational-angle sensor (60) is a gap sensor that outputs a signal corresponding to a distance to a measurement target.

The rotational-angle sensor (60) outputs a signal corresponding to the distance to the first shaft portion (the shaft portion provided with the first step portions (201)) of the measurement target portion (25) of the shaft (20).

As illustrated in Fig. 17, when the position of the shaft (20) is at the reference position, the distance (D11) between each of "the first step portions (201) that are not used also as the second step portion (202)" of the first shaft portion and the rotational-angle sensor (60) is longer than the distance (D10) between the remaining portion, excluding the first step portions (201), of the first shaft portion and the rotational-angle sensor (60). Further, the distance between "the first step portion (201) that is used also as the second step portion (202)" of the first shaft portion and the rotational-angle sensor (60) is longer than the distance (D11) between each of "the first step portions (201) that are not used also as the second step portion (202)" of the first shaft portion and the rotational-angle sensor (60).

Therefore, the level (amplitude value) of a signal output from the rotational-angle sensor (60) increases when the rotational-angle sensor (60) faces the first step portions (201). The level of a signal output from the rotational-angle sensor (60) when the rotational-angle sensor (60) faces the first step portion (201) that is used also as the second step portion (202) is higher than the level of a signal output from the rotational-angle sensor (60) when the rotational-angle sensor (60) faces the first step portions (201) that are not used also as the second step portion (202).

### [Detection of Rotational Angle]

In Modification 4 of the embodiment, as described below, the controller (80) detects the rotational angle of the shaft (20) on the basis of a result of comparison of the level (amplitude value) of a signal output from the rotational-angle sensor (60) with two predetermined thresholds (the first threshold (Th1) and the second threshold (Th2)). The second threshold (Th2) is higher than the first threshold (Th1). Hereinafter, a signal output from the rotational-angle sensor (60) is referred to as a "sensor signal (SS)".

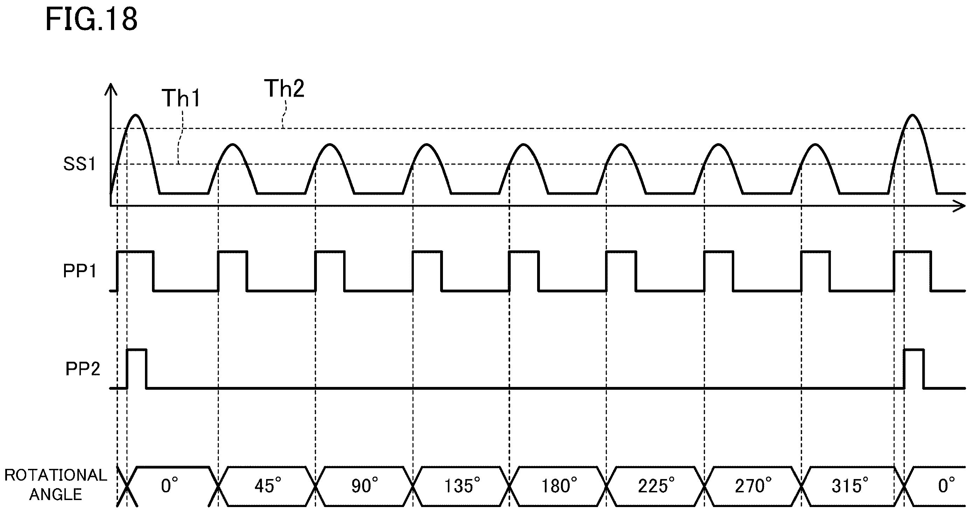

Specifically, as illustrated in Fig. 18, the controller (80) compares the level of the sensor signal (SS) with the first threshold (Th1) and generates the first result signal (PP1) in accordance with a result of the comparison. The controller (80) changes the level of the first result signal (PP1) from a low level to a high level when the level of the sensor signal (SS) is higher than the first threshold (Th1) and changes the level of the first result signal (PP1) from a high level to a low level when the level of the sensor signal (SS) is lower than the first threshold (Th1).

For example, the first threshold (Th1) is set to a level that is lower than the level of the sensor signal (SS) when the rotational- angle sensor (60) faces the "first step portions (201) that are not used also as the second step portion (202)" of the first shaft portion of the measurement target portion (25) of the shaft (20) and that is higher than the level of the sensor signal (SS) when the rotational-angle sensor (60) faces the remaining portion, excluding the first step portions (201), of the first shaft portion of the measurement target portion (25) of the shaft (20).

Further, the controller (80) compares the level of the sensor signal (SS) with the second threshold (Th2) and generates the second result signal (PP2) in accordance with a result of the comparison. The controller (80) changes the level of the second result signal (PP2) from a low level to a high level when the level of the sensor signal (SS) is higher than the second threshold (Th2) and changes the level of the second result signal (PP2) from a high level to a low level when the level of the sensor signal (SS) is lower than the second threshold (Th2).

For example, the second threshold (Th2) is set to a level that is lower than the level of the sensor signal (SS) when the rotational-angle sensor (60) faces "the first step portion (201) that is used also as the second step portion (202)" of the first shaft portion of the measurement target portion (25) of the shaft (20) and that is higher than the first threshold (Th1).

Then, as illustrated in Fig. 18, when the level of the second result signal (PP2) changes from a low level to a high level, the controller (80) sets the rotational angle of the shaft (20) to "0°". In addition, the controller (80) increases the rotational angle of the shaft (20) by a predetermined amount (45° in this example) each time when the level of the first result signal (PP1) changes from a low level to a high level. The rotational angle of the shaft (20) is thus detected.

### [Effects in Modification 4 of Embodiment]

As described above, in Modification 4 of the embodiment, one of the plurality of first step portions (201) provided at the measurement target portion (25) of the shaft (20) also serves as the second step portion (202).

With the aforementioned configuration, the number of the rotational-angle sensors (60) can be reduced compared with a case where the first step portions (201) and the second step portion (202) are separately provided at the measurement target portion (25) of the shaft (20). Consequently, costs required for sensors can be reduced.

### (Refrigeration Device)

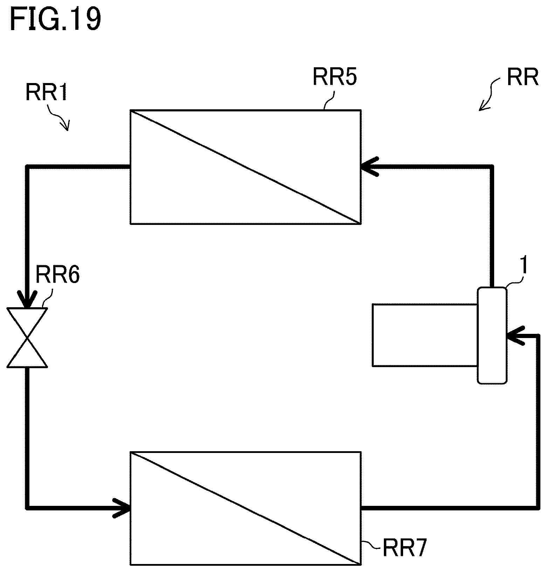

In Fig. 19, a configuration of a refrigeration device (RR) is illustrated as an example. The refrigeration device (RR) includes a refrigerant circuit (RR1) filled with a refrigerant. The refrigerant circuit (RR1) includes the turbo compressor (1), a radiator (RR5), a decompression mechanism (RR6), and an evaporator (RR7). In this example, the decompression mechanism (RR6) is an expansion valve. The refrigerant circuit (RR1) performs a vapor compression refrigeration cycle.

In a refrigeration cycle, the refrigerant discharged from the turbo compressor (1) dissipates heat in the radiator (RR5). The refrigerant that has flowed out from the radiator (RR5) is decompressed in the decompression mechanism (RR6) and evaporates in the evaporator (RR7). The refrigerant that has flowed out from the evaporator (RR7) is sucked into the turbo compressor (1).

In this example, the refrigeration device (RR) is an air conditioner. The air conditioner may be a machine dedicated to cooling or a machine dedicated to heating. The air conditioner also may be an air conditioner in which cooling and heating are switched. In this case, the air conditioner includes a switching mechanism (for example, a four-way switching valve) that switches the circulation direction of a refrigerant. The refrigeration device (RR) also may be a water heater, a chiller unit, a cooling device for cooling air in a device, or the like. The cooling device cools air inside a refrigerator, a freezer, a container, or the like.

### (Other Embodiments)

In the above description, an example in which the drive system (10) includes the bearingless motor (30) and the magnetic bearing (40) (specifically, the radial magnetic bearing (41) and the thrust magnetic bearing (42)) is presented. The drive system (10) is, however, not limited thereto.

For example, the drive system (10) may include another bearingless motor (30) instead of the radial magnetic bearing (41). The support windings (35) of the bearingless motor (30) function as the support portion (11). The drive windings (36) of the bearingless motor (30) function as the drive portion (12).

Alternatively, the drive system (10) may include, instead of the bearingless motor (30), another radial magnetic bearing (41) and a motor that only rotationally drives the shaft (20). The radial magnetic bearing (41) functions as the support portion (11). This motor functions as the drive portion (12).

In the above description, an example in which the first step portions (201) are concave portions is presented. The first step portions (201) are, however, not limited thereto. For example, the first step portions (201) may be projecting portions. The same applies to the second step portion (202).

Further, in the above description, an example in which the gap sensor is the eddy-current gap sensor is presented. The gap sensor is, however, not limited thereto. For example, the gap sensor may be a gap sensor of another type, such as an ultrasonic type or an optical type. When the measurement target portion (25) of the shaft (20) includes a magnetic body, a Hall element may be used as the gap sensor.

Further, in the description of the embodiment, an example in which "the first shaft portion provided with the plurality of first step portions (201)" and "the second shaft portion provided with the second step portion (202)" are adjacent to each other in the axial direction of the shaft (20) is presented. The first shaft portion and the second shaft portion are, however, not limited thereto. For example, the second shaft portion may be disposed at a position away from the first shaft portion.

In the description of Modification 2 of the embodiment, an example in which the drive portion (12) is controlled to rotate the shaft (20) after the support portion (11) is controlled such that the shaft (20) is moved by an electromagnetic force and the measurement target portion (25) of the shaft (20) approaches the rotational-angle sensor (60). Control is, however, not limited thereto. For example, the controller (80) may control, while controlling the drive portion (12) to rotate the shaft (20), the support portion (11) such that the shaft (20) is moved by an electromagnetic force and the measurement target portion (25) of the shaft (20) approaches the rotational-angle sensor (60). The same applies to Modification 3 of the embodiment.

Further, in the description of Modification 4 of the embodiment, an example in which "the first step portion (201) used also as the second step portion (202)" is a concave portion that is deeper than "the other first step portions (201) not used also as the second step portion (202)" is presented. The first step portions (201) are, however, not limited thereto. The first step portion (201) that is used also as the second step portion (202) may be a concave portion that is shallower than the other first step portions (201) that are not used also as the second step portion (202).

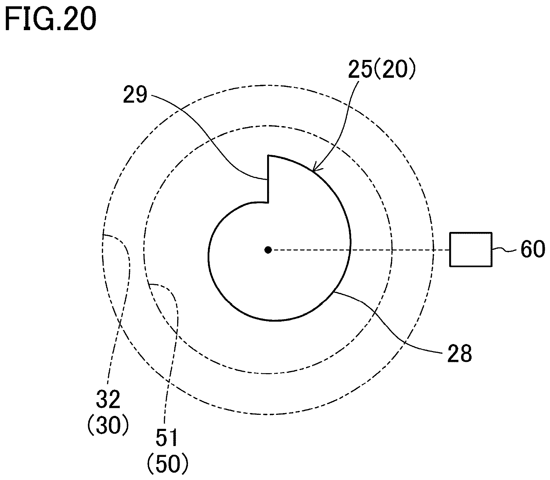

In the above description, an example in which the measurement target portion (25) of the shaft (20) is provided with the first step portions (201) and the second step portion (202) is presented. The measurement target portion (25) is, however, not limited thereto. For example, as illustrated in Fig. 20, the measurement target portion (25) may include a curved surface portion (28) and a flat surface portion (29). The curved surface portion (28) is curved so as to be an involute curve that makes one round in the circumferential direction of the shaft (20) in plan view (when viewed in the axial direction of the shaft (20)). The flat surface portion (29) extends in the radial direction of the shaft (20) from one end of the curved surface portion (28) to another end of the flat surface portion (29). With such a configuration, the distance between the curved surface portion (28) of the measurement target portion (25) and the rotational-angle sensor (60) can be continuously changed in accordance with a change in the rotational angle of the shaft (20). Consequently, a change in the rotational angle of the shaft (20) can be detected. In addition, the distance between the measurement target portion (25) and the rotational-angle sensor (60) can be rapidly changed at the flat surface portion (29) of the measurement target portion (25). Consequently, the rotation reference of the shaft (20) can be detected.

While embodiments and modifications have been described, it will be understood that forms and details can be variously changed within the scope of the appended claims. In addition, components according to the embodiments, the modifications, and the other embodiments described above may be combined or replaced, as appropriate.

### Industrial Applicability

As described above, the present disclosure is useful as a drive system, a turbo compressor, and a refrigeration device.

### Reference Signs List

- 1: turbo compressor
- 2: casing
- 3: impeller
- .10: drive system
- 11: support portion
- 12: drive portion
- 20: shaft
- 25: measurement target portion
- 201: first step portion
- 202: second step portion
- 30: bearingless motor
- 31: rotor
- 32: stator
- 35: support winding
- 36: drive winding
- 40: magnetic bearing
- 41: radial magnetic bearing
- 42: thrust magnetic bearing
- 50: touchdown bearing
- 60: rotational-angle sensor
- 61: first rotational-angle sensor
- 62: second rotational-angle sensor
- 70: position sensor
- 71: radial position sensor
- 72: thrust position sensor
- 80: controller

## Claims

1. A drive system comprising:
a shaft (20) including a measurement target portion (25);
a support portion (11) configured to support the shaft (20) contactlessly by an electromagnetic force;
a drive portion (12) configured to rotationally drive the shaft (20) by an electromagnetic force;
a touchdown bearing (50) configured to, when the shaft (20) is not supported by the support portion (11) contactlessly, come into contact with the shaft (20) and support the shaft (20) such that the shaft (20) is rotatable; and
a controller (80) configured to perform a starting process before the shaft (20) is supported contactlessly by the support portion (11),
**characterized in that**,
in the starting process, the controller (80) is configured to detect a rotational angle of the shaft (20) in a state in which the shaft (20) is in contact with the touchdown bearing (50).

2. The drive system according to claim 1, comprising:
a rotational-angle sensor (60) configured to output a signal corresponding to a rotational angle of the measurement target portion (25), wherein
in the starting process, the controller (80) controls the drive portion (12) to rotate the shaft (20) in a state in which the shaft (20) is in contact with the touchdown bearing (50), and the controller (80) detects the rotational angle of the shaft (20) based on the signal output from the rotational-angle sensor (60).

3. The drive system according to claim 2, wherein
the rotational-angle sensor (60) is a gap sensor configured to output a signal corresponding to a distance to the measurement target portion (25), and
the measurement target portion (25) is configured such that a distance to the rotational-angle sensor (60) changes in accordance with a change in the rotational angle of the shaft (20).

4. The drive system according to claim 3, wherein
in the starting process, the controller (80) controls the support portion (11) such that the shaft (20) is moved by the electromagnetic force and the measurement target portion (25) approaches the rotational-angle sensor (60).

5. The drive system according to claim 4, wherein
in the starting process, the controller (80) controls, while controlling the support portion (11) such that a state in which the measurement target portion (25) is close to the rotational-angle sensor (60) is maintained, the drive portion (12) to rotate the shaft (20).

6. The drive system according to claim 3, wherein
the rotational-angle sensor (60) is disposed such that a distance (G1) between the rotational-angle sensor (60) and the measurement target portion (25) when the shaft (20) is not supported contactlessly by the support portion (11) is less than or equal to a distance (G0) between the rotational-angle sensor (60) and the measurement target portion (25) when a position of the shaft (20) supported contactlessly by the support portion (11) is at a reference position.

7. The drive system according to any one of claims 3 to 6, comprising:
a position sensor (70) that is a gap sensor configured to output a signal corresponding to a distance to the shaft (20), wherein
a dynamic range of the rotational-angle sensor (60) is identical to a dynamic range of the position sensor (70).

8. The drive system according to any of one of claims 3 to 7, wherein
the measurement target portion (25) is provided with a plurality of first step portions (201) arranged at predetermined intervals in a circumferential direction of the shaft (20), and
one of the plurality of first step portions (201) also serves as a second step portion (202) for detecting the rotation reference of the shaft (20).

9. The drive system according to any one of claims 1 to 8, comprising:
a bearingless motor (30) including a support winding (35) and a drive winding (36), wherein
the support winding (35) is a winding configured to generate, by being energized, an electromagnetic force for supporting the shaft (20) contactlessly, the support winding (35) functioning as the support portion (11), and
the drive winding (36) is a winding configured to generate, by being energized, an electromagnetic force for rotationally driving the shaft (20), the drive winding (36) functioning as the drive portion (12).

10. A turbo compressor comprising the drive system according to any one of claims 1 to 9.

11. A refrigeration device comprising the turbo compressor according to claim 10.

## Patentansprüche

1. Antriebssystem, umfassend:
eine Welle (20), die einen Messzielabschnitt (25) einschließt;
einen Stützabschnitt (11), der ausgebildet ist, um die Welle (20) durch eine elektromagnetische Kraft berührungslos zu stützen;
einen Antriebsabschnitt (12), der ausgebildet ist, um die Welle (20) durch eine elektromagnetische Kraft drehend anzutreiben;
ein Fanglager (50), das ausgebildet ist, um, wenn die Welle (20) nicht durch den Stützabschnitt (11) berührungslos gestützt wird, mit der Welle (20) in Berührung zu kommen und die Welle (20) zu stützen, sodass die Welle (20) drehbar ist; und
eine Steuereinheit (80), die ausgebildet ist, um einen Startprozess auszuführen, bevor die Welle (20) durch den Stützabschnitt (11) berührungslos gestützt wird,
**dadurch gekennzeichnet, dass**
die Steuereinheit (80) beim Startprozess ausgebildet ist, um einen Drehwinkel der Welle (20) in einem Zustand zu erkennen, in dem die Welle (20) mit dem Fanglager (50) in Berührung steht.

2. Antriebssystem nach Anspruch 1, umfassend:
einen Drehwinkelsensor (60), der ausgebildet ist, um ein Signal auszugeben, das einem Drehwinkel des Messzielabschnitts (25) entspricht, wobei
die Steuereinheit (80) beim Startprozess den Antriebsabschnitt (12) steuert, um die Welle (20) in einem Zustand zu drehen, in dem die Welle (20) mit dem Fanglager (50) in Berührung steht, und die Steuereinheit (80) den Drehwinkel der Welle (20) auf der Grundlage des von dem Drehwinkelsensor (60) ausgegebenen Signals erkennt.

3. Antriebssystem nach Anspruch 2, wobei
der Drehwinkelsensor (60) ein Spaltsensor ist, der ausgebildet ist, um ein Signal auszugeben, das einem Abstand zum Messzielabschnitt (25) entspricht, und
der Messzielabschnitt (25) ausgebildet ist, sodass sich ein Abstand zum Drehwinkelsensor (60) in Übereinstimmung mit einer Änderung des Drehwinkels der Welle (20) ändert.

4. Antriebssystem nach Anspruch 3, wobei
die Steuereinheit (80) beim Startprozess den Stützabschnitt (11) steuert, sodass die Welle (20) durch die elektromagnetische Kraft bewegt wird und sich der Messzielabschnitt (25) dem Drehwinkelsensor (60) annähert.

5. Antriebssystem nach Anspruch 4, wobei
die Steuereinheit (80) beim Startprozess, während sie den Stützabschnitt (11) steuert, sodass ein Zustand, in dem der Messzielabschnitt (25) nahe an dem Drehwinkelsensor (60) ist, aufrechterhalten wird, den Antriebsabschnitt (12) steuert, um die Welle (20) zu drehen.

6. Antriebssystem nach Anspruch 3, wobei
der Drehwinkelsensor (60) angeordnet ist, sodass ein Abstand (G1) zwischen dem Drehwinkelsensor (60) und dem Messzielabschnitt (25), wenn die Welle (20) nicht durch den Stützabschnitt (11) berührungslos gestützt wird, kleiner als oder gleich einem Abstand (G0) zwischen dem Drehwinkelsensor (60) und dem Messzielabschnitt (25) ist, wenn sich eine Position der durch den Stützabschnitt (11) berührungslos gestützten Welle (20) an einer Referenzposition befindet.

7. Antriebssystem nach einem der Ansprüche 3 bis 6, umfassend:
einen Positionssensor (70), der ein Spaltsensor ist und ausgebildet ist, um ein Signal auszugeben, das einem Abstand zur Welle (20) entspricht, wobei
ein Dynamikbereich des Drehwinkelsensors (60) mit einem Dynamikbereich des Positionssensors (70) identisch ist.

8. Antriebssystem nach einem der Ansprüche 3 bis 7, wobei
der Messzielabschnitt (25) mit einer Vielzahl von ersten Stufenabschnitten (201) versehen ist, die in vorbestimmten Intervallen in Umfangsrichtung der Welle (20) angeordnet sind, und
einer der Vielzahl von ersten Stufenabschnitten (201) auch als zweiter Stufenabschnitt (202) zum Erkennen der Drehreferenz der Welle (20) dient.

9. Antriebssystem nach einem der Ansprüche 1 bis 8, umfassend:
einen lagerlosen Motor (30), der eine Stützwicklung (35) und eine Antriebswicklung (36) einschließt, wobei
die Stützwicklung (35) eine Wicklung ist, die ausgebildet ist, um durch Versorgung mit Strom eine elektromagnetische Kraft zum berührungslosen Stützen der Welle (20) zu erzeugen, wobei die Stützwicklung (35) als der Stützabschnitt (11) fungiert, und
die Antriebswicklung (36) eine Wicklung ist, die ausgebildet ist, um durch Versorgung mit Strom eine elektromagnetische Kraft zum drehenden Antreiben der Welle (20) zu erzeugen, wobei die Antriebswicklung (36) als der Antriebsabschnitt (12) fungiert.

10. Turboverdichter, umfassend das Antriebssystem nach einem der Ansprüche 1 bis 9.

11. Kühlvorrichtung, umfassend den Turboverdichter nach Anspruch 10.

## Revendications

1. Système d'entraînement comprenant :
un arbre (20) incluant une partie (25) cible de mesure ;
une partie (11) de support configurée pour supporter l'arbre (20) sans contact par une force électromagnétique ;
une partie (12) d'entraînement configurée pour entraîner en rotation l'arbre (20) par une force électromagnétique ;
un palier (50) d'appui configuré pour, lorsque l'arbre (20) n'est pas supporté sans contact par la partie (11) de support, venir en contact avec l'arbre (20) et supporter l'arbre (20) de sorte que l'arbre (20) puisse être mis en rotation ; et
un dispositif (80) de commande configuré pour réaliser un processus de démarrage avant que l'arbre (20) ne soit supporté sans contact par la partie (11) de support,
**caractérisé en ce que**,
dans le processus de démarrage, le dispositif (80) de commande est configuré pour détecter un angle de rotation de l'arbre (20) dans un état dans lequel l'arbre (20) est en contact avec le palier (50) d'appui.

2. Système d'entraînement selon la revendication 1, comprenant :
un capteur (60) d'angle de rotation configuré pour délivrer en sortie un signal correspondant à un angle de rotation de la partie (25) cible de mesure, dans lequel
dans le processus de démarrage, le dispositif (80) de commande commande la partie (12) d'entraînement pour mettre en rotation l'arbre (20) dans un état dans lequel l'arbre (20) est en contact avec le palier (50) d'appui, et le dispositif (80) de commande détecte l'angle de rotation de l'arbre (20) sur la base du signal délivré en sortie à partir du capteur (60) d'angle de rotation.

3. Système d'entraînement selon la revendication 2, dans lequel
le capteur (60) d'angle de rotation est un capteur d'intervalle configuré pour délivrer en sortie un signal correspondant à une distance à la partie (25) cible de mesure, et
la partie (25) cible de mesure est configurée de sorte qu'une distance au capteur (60) d'angle de rotation change en fonction d'un changement de l'angle de rotation de l'arbre (20).

4. Système d'entraînement selon la revendication 3, dans lequel
dans le processus de démarrage, le dispositif (80) de commande commande la partie (11) de support de sorte que l'arbre (20) soit déplacé par la force électromagnétique et que la partie (25) cible de mesure s'approche du capteur (60) d'angle de rotation.

5. Système d'entraînement selon la revendication 4, dans lequel
dans le processus de démarrage, le dispositif (80) de commande commande, tout en commandant la partie (11) de support de sorte qu'un état dans lequel la partie (25) cible de mesure est proche du capteur (60) d'angle de rotation soit maintenu, la partie (12) d'entraînement pour mettre en rotation l'arbre (20).

6. Système d'entraînement selon la revendication 3, dans lequel
le capteur (60) d'angle de rotation est disposé de sorte qu'une distance (G1) entre le capteur (60) d'angle de rotation et la partie (25) cible de mesure lorsque l'arbre (20) n'est pas supporté sans contact par la partie (11) de support soit inférieure ou égale à une distance (G0) entre le capteur (60) d'angle de rotation et la partie (25) cible de mesure lorsqu'une position de l'arbre (20) supporté sans contact par la partie (11) de support est à une position de référence.

7. Système d'entraînement selon l'une quelconque des revendications 3 à 6, comprenant :
un capteur (70) de position qui est un capteur d'intervalle configuré pour délivrer en sortie un signal correspondant à une distance à l'arbre (20), dans lequel
une plage dynamique du capteur (60) d'angle de rotation est identique à une plage dynamique du capteur (70) de position.

8. Système d'entraînement selon l'une quelconque des revendications 3 à 7, dans lequel
la partie (25) cible de mesure est fournie avec une pluralité de premières parties (201) étagées agencées à des intervalles prédéterminés dans une direction circonférentielle de l'arbre (20), et
l'une de la pluralité de premières parties (201) étagées sert également de deuxième partie (202) étagée pour détecter la référence de rotation de l'arbre (20).

9. Système d'entraînement selon l'une quelconque des revendications 1 à 8, comprenant :
un moteur (30) sans palier incluant un enroulement (35) de support et un enroulement (36) d'entraînement, dans lequel
l'enroulement (35) de support est un enroulement configuré pour générer, en étant alimenté, une force électromagnétique destinée à supporter l'arbre (20) sans contact, l'enroulement (35) de support fonctionnant en tant que la partie (11) de support, et
l'enroulement (36) d'entraînement est un enroulement configuré pour générer, en étant alimenté, une force électromagnétique destinée à entraîner en rotation l'arbre (20), l'enroulement (36) d'entraînement fonctionnant en tant que la partie (12) d'entraînement.

10. Turbocompresseur comprenant le système d'entraînement selon l'une quelconque des revendications 1 à 9.

11. Dispositif de réfrigération comprenant le turbocompresseur selon la revendication 10.
